# EUROPEAN PATENT APPLICATION

(11) **EP 4 826 980 A1**
(43) Date of publication of application: **21.10.2026**
(21) Application number: 24903416.6
(22) Date of filing: 13.11.2024
(51) Int. Cl.: H02M 3/28, H02J 7/00

(54) **CONTROL DEVICE FOR POWER CONVERTER, POWER CONVERSION SYSTEM, PROGRAM, AND CONTROL METHOD FOR POWER CONVERTER**

(30) Priority: 12.12.2023 JP 2023209101
(71) Applicant: DENSO CORPORATION, Kariya-city, Aichi 448-8661 (JP)
(72) Inventor: SUZUKI, Kazuma, Nisshin-city, Aichi 470-0111 (JP); KURACHI, Taisuke, Kariya-city, Aichi 448-8661 (JP)
(74) Representative: TBK
(86) International application number: PCT/JP2024/040254
(87) International publication number: WO 2025/126756

(57) **Abstract**

A control apparatus (16 to 19) is applied to a power conversion system (10). The power conversion system includes a plurality of storage battery modules (30, 60, 90, 130, 160, 190, 230, 260, 290), each including a storage battery (31, 61, 91, 131, 161, 191, 231, 261, 291) and a power converter (40, 70, 100, 140, 170, 1100, 240, 270, 2100) electrically connected to the storage battery. The control apparatus includes a voltage obtainer (16a) configured to obtain a terminal voltage at at least one of the power converters, and a controller (16c) configured to perform switching control for each power converter so as to suppress a magnitude of the obtained terminal voltage from exceeding an upper limit voltage.

## Description

The present application claims the benefit of priority of Japanese Patent Application No. 2023-209101 filed on December 12, 2023, the disclosure of which is incorporated in its entirety herein by reference.

### Technical Field

This disclosure relates generally to a control apparatus for a power converter, a power conversion system, a program, and a control method for a power converter.

### Background Art

A power conversion system is known which includes a power converter and a plurality of storage batteries. The power converters works to perform power conversion between the storage batteries. Such a technique is taught in a first patent document listed below.

### [Prior Art Document]

### [Patent Document]

First Patent Document : Japanese Patent First Publication No. 2022-23722

### SUMMARY OF THE INVENTION

A plurality of storage battery modules each including a storage battery and a power converter may be electrically connected in parallel. In this case, it is desired to appropriately implement a power conversion system in which the storage battery modules are electrically connected in parallel.

The present disclosure has been made to solve the above-described goal, and a main object thereof is to provide a control apparatus for power converters, a power conversion system, a program, and a control method for power converters that are capable of appropriately implementing a power conversion system in which a plurality of storage battery modules are electrically connected in parallel.

According to one aspect of this disclosure, there is provided a control apparatus for use with a power conversion system equipped with a plurality of storage battery modules each of which includes a storage battery and a power converter electrically connected to the storage battery, the storage battery modules being electrically connected in parallel with each other, the control apparatus comprising: (a) a voltage obtainer that obtains a terminal voltage developed at at least one of the power converters; and (b) a controller that works to perform switching control for the power converters to suppress a magnitude of the obtained terminal voltage from exceeding an upper limit voltage.

In a configuration in which a plurality of energy storage modules are electrically connected in parallel with each other, electrical power required by a power conversion system is shared among the storage battery modules. In this case, if the sharing of the required power is not appropriate, there is a concern that an overvoltage is applied to at least one of power converters installed in the storage battery modules. Therefore, there is a concern that the power conversion system in which the energy storage modules are electrically connected in parallel cannot be appropriately realized.

In order to eliminate the above problem, the control apparatus in this disclosure is configured to perform the switching control for the power converters to suppress the termina voltage developed at at least one of the power converter from exceeding the upper limit voltage. In this case, it is possible for each of the energy storage modules to perform power adjustment for suppressing application of an overvoltage to each of the power converters. Accordingly, it is possible to suppress application of an overvoltage to the power converters while responding to a demand for the power conversion system. This enables the power conversion system in which the energy storage modules are electrically connected in parallel to be appropriately realized.

### BRIEF DESCRIPTION OF THE DRAWINGS

The present disclosure will be understood more fully from the detailed description given hereinbelow and from the accompanying drawings of the preferred embodiments of the invention, which, however, should not be taken to limit the invention to the specific embodiments but are for the purpose of explanation and understanding only.

In the drawings:
Fig. 1 is a configuration diagram of a power conversion system according to a first embodiment;
Fig. 2 is a diagram showing an example of a power converter;
Fig. 3 is a flowchart showing a processing procedure of overvoltage suppression control;
Fig. 4 is a diagram showing an example of a re-sharing process in overvoltage suppression control;
Fig. 5 is a diagram showing an example of a re-sharing process in overvoltage suppression control;
Fig. 6 is a diagram showing an example of a re-sharing process in overvoltage suppression control;
Fig. 7 is a diagram showing an example of a re-sharing process in overvoltage suppression control;
Fig. 8 is a flowchart showing a processing procedure of overcurrent suppression control;
Fig. 9 is a diagram showing an example of a re-sharing process in overcurrent suppression control;
Fig. 10 is a diagram showing an example of a re-sharing process in overcurrent suppression control;
Fig. 11 is a diagram showing an example of a current-reducing process in overcurrent suppression control;
Fig. 12 is a configuration diagram of a power conversion system according to a second embodiment;
Fig. 13 is a configuration diagram of a power conversion system according to another embodiment;
Fig. 14 is a configuration diagram of a power conversion system according to another embodiment; and
Fig. 15 is a configuration diagram of a power conversion system according to another embodiment.

### MODES FOR CARRYING OUT THE INVENTION

Embodiments will be described with reference to the drawings. In the embodiments, the functionally and/or structurally corresponding portions and/or the associated portions may be denoted by the same reference signs or by reference signs whose hundreds digit is different. For the corresponding portions and/or the associated portions, the description of other embodiments will be referred to.

### FIRST EMBODIMENT

The first embodiment embodying a control apparatus according to the present disclosure will be described with reference to the drawings. In the present embodiment, the control apparatus constitutes a power conversion system mounted in an electric vehicle such as a hybrid vehicle.

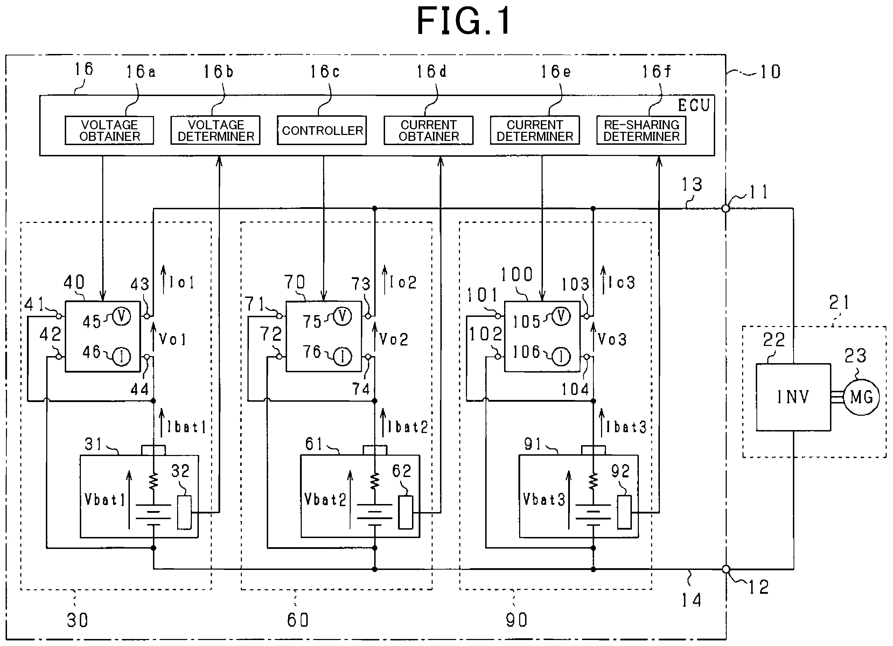

Fig. 1 illustrates a structure of the power conversion system 10 mounted in the vehicle. The power conversion system 10 includes a plurality of storage battery modules (will also be referred to below as storage units), and in the present embodiment includes the first storage battery module 30, the second storage battery module 60, and the third storage battery module 90, which are three modules. The storage battery modules 30, 60, and 90 each include the storage batteries 31, 61, and 91 (i.e., storage units). The storage batteries 31, 61, and 91 are, for example, battery packs configured as a series connection body of battery cells. The battery cells may be secondary batteries such as lithium-ion batteries.

The high-potential terminal 11 and the low-potential terminal 12 of the power conversion system 10 are electrically connected to the load 21. The high-potential terminal 11 is electrically connected to the positive electrodes of the storage battery modules 30, 60, and 90 via the high-potential-side path 13 such as a bus bar. The low-potential terminal 12 is electrically connected to the negative electrodes of the storage battery modules 30, 60, and 90 via the low-potential-side path 14 such as a bus bar. In other words, the storage battery modules 30, 60, and 90 are electrically connected in parallel to the load 21.

Specifically, the load 21 includes the three-phase inverter 22 and the rotating electrical machine 23 having armature windings corresponding to the number of phases and electrically connected to the inverter 22. The inverter 22 works to control electrical currents flowing through the windings of the respective phases. The rotating electrical machine 23 functions as a vehicle-mounted main machine. The rotor of the rotating electrical machine 23 is configured to be capable of transmitting power to drive wheels of the vehicle. The rotating electrical machine 23 is, for example, a permanent magnet synchronous machine.

The high-potential path 13 is electrically connected to the positive electrode of the inverter 22, while the low-potential path 14 is electrically connected to the negative electrode of the inverter 22. This enables energization between the power conversion system 10 and the load 21. The inverter 22 works to convert DC electric power supplied from the power conversion system 10 into AC electric power, and supplies the electric power to the phase windings of the rotating electrical machine 23. In this case, the rotating electrical machine 23 serves as a driving power source for traveling of the vehicle. Further, the rotating electrical machine 23 performs regenerative power generation by rotational force applied to the rotor. The inverter 22 converts the generated AC electric power into DC electric power, and outputs the electric power to the power conversion system 10.

The storage battery modules 30, 60, and 90 include the power converters 40, 70, and 100, respectively. The power converters 40, 70, and 100 are electrically connected to the storage batteries 31, 61, and 91, respectively, and are also connected to the load 21. In the following discussion, the storage battery 31 and the power converter 40 of the first storage battery module 30 will also be referred to as "the first storage battery 31" and "the first power converter 40," the storage battery 61 and the power converter 70 of the second storage battery module 60 will also be referred to as "the second storage battery 61" and "the second power converter 70," and the storage battery 91 and the power converter 100 of the third storage battery module 90 will also be referred to as "the third storage battery 91" and "the third power converter 100."

Next, in the storage battery modules 30, 60, and 90, the connection relationship among the storage batteries 31, 61, and 91, the power converters 40, 70, and 100, and the load 21 will be specifically described. First, the first storage battery module 30 will be described as an example.

The first power converter 40 includes the primary positive terminal (which will also be referred to below as a first primary terminal) 41 and the primary negative terminal (which will also be referred to below as a second primary terminal) 42 constituting the primary terminal pair, and the secondary positive terminal (which will also be referred to below as a first secondary terminal) 43 and the secondary negative terminal (which will also be referred to below as a second secondary terminal) 44 constituting the secondary terminal pair. The primary positive terminal 41 of the first power converter 40 is electrically connected to the positive electrode of the first storage battery 31. The primary negative terminal 42 of the first power converter 40 and the negative electrode of the first storage battery 31 are electrically connected to the inverter 22 via the low-potential path 14. In other words, the primary terminal pair of the first power converter 40 is electrically connected in parallel with the first storage battery 31. In this case, the voltage of the first storage battery 31 is applied to the primary terminal pair of the first power converter 40.

The secondary negative terminal 44 of the first power converter 40 is electrically connected to the positive electrode of the first storage battery 31. The secondary positive terminal 43 of the first power converter 40 is electrically connected to the inverter 22 via the high-potential path 13. In other words, the secondary terminal pair of the first power converter 40 is electrically connected in series with the positive electrode of the first storage battery 31.

The second power converter 70 includes the primary positive terminal 71 and the primary negative terminal 72 constituting the primary terminal pair, and the secondary positive terminal 73 and the secondary negative terminal 74 constituting the secondary terminal pair. The third power converter 100 includes the primary positive terminal 101 and the primary negative terminal 102 constituting the primary terminal pair, and the secondary positive terminal 103 and the secondary negative terminal 104 constituting the secondary terminal pair. In the second and third storage battery modules 60 and 90, the connection relationship among the respective terminals 71 to 74 and 101 to 104 of the corresponding power converters 70 and 100, the corresponding storage batteries 61 and 91, and the load 21 is the same as that in the first storage battery module 30, and a detailed description thereof is omitted. Accordingly, the storage battery modules 30, 60, and 90 are electrically connected in parallel to the load 21.

In the storage battery modules 30, 60, and 90, the secondary terminal voltages Vo1, Vo2, and Vo3 applied to the secondary terminal pairs of the power converters 40, 70, and 100 are difference voltages between the voltages across the paths 13 and 14 (specifically, supply voltages to the inverter 22) and the voltages Vbat1, Vbat2, and Vbat3 of the corresponding storage batteries 31, 61, and 91. The secondary terminal voltages Vo1, Vo2, and Vo3 of the storage battery modules 30, 60, and 90 are lower than the rated voltages (for example, 400 V) of the corresponding storage batteries 31, 61, and 91. Therefore, the secondary rated voltages at the secondary terminals of the power converters 40, 70, and 100 are set lower than the rated voltages of the corresponding storage batteries 31, 61, and 91 and are, for example, 16 V. This enables downsizing of the power converters 40, 70, and 100.

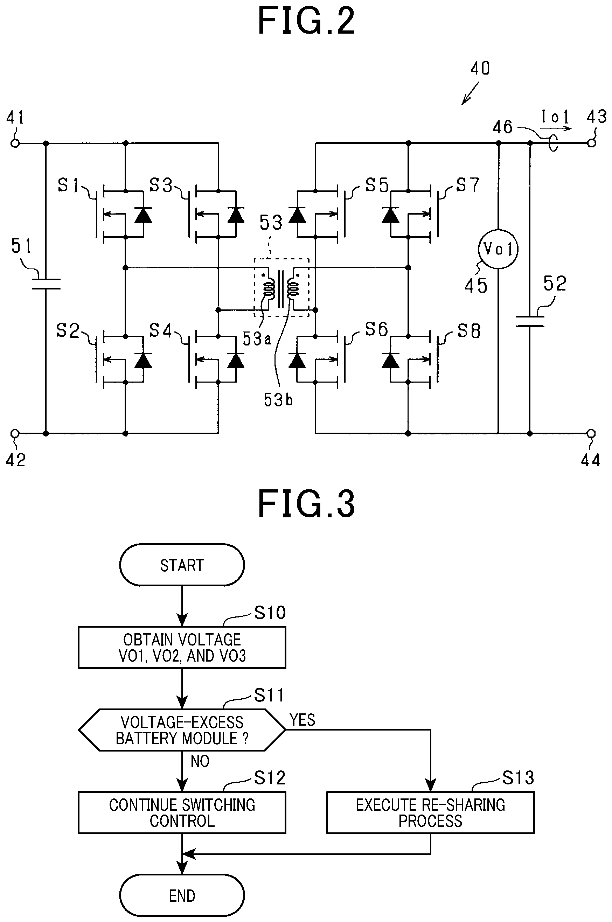

Fig. 2 shows an example of the first power converter 40. The first power converter 40 is implemented by an isolated DC-DC converter. The first power converter 40 includes the first to eighth switches S1 to S8, the primary capacitor 51, the secondary capacitor 52, and the transformer 53. In the present embodiment, voltage-controlled semiconductor switching devices are used as the first to eighth switches S1 to S8, and more specifically N-channel MOSFETs are used. In this case, the high-potential terminal of each of the switches S1 to S8 is a drain, and the low-potential terminal thereof is a source. Further, each of the switches S1 to S8 includes a body diode.

The drain of the first switch S1 and the drain of the third switch S3 are electrically connected to a first end of the primary capacitor 51 and the primary positive terminal 41. The source of the first switch S1 is connected to the drain of the second switch S2. The source of the third switch S3 is connected to the drain of the fourth switch S4. The source of the second switch S2 and the source of the fourth switch S4 are electrically connected to a second end of the primary capacitor 51 and the primary negative terminal 42.

The drain of the fifth switch S5 and the drain of the seventh switch S7 are electrically connected to a first end of the secondary capacitor 52 and the secondary positive terminal 43. The source of the fifth switch S5 is connected to the drain of the sixth switch S6. The source of the seventh switch S7 is connected to the drain of the eighth switch S8. The source of the sixth switch S6 and the source of the eighth switch S8 are electrically connected to a second end of the secondary capacitor 52 and the secondary negative terminal 44.

The transformer 53 includes the primary winding 53a and the secondary winding 53b. The primary winding 53a and the secondary winding 53b are wound around a common core. Accordingly, the primary winding 53a and the secondary winding 53b are magnetically coupled by the common core. When the potential of the first end of the primary winding 53a becomes higher than the potential of the second end thereof, it will cause an induced voltage to be generated such that the potential of the first end of the secondary winding 53b becomes higher than the potential of the second end thereof. Alternatively, when the potential of the second end of the primary winding 53a becomes higher than the potential of the first end thereof, it will cause an induced voltage to be generated such that the potential of the second end of the secondary winding 53b becomes higher than the potential of the first end thereof.

The first end of the primary winding 53a is electrically connected to a connection point between the first switch S1 and the second switch S2, while the second end of the primary winding 53a is electrically connected to a connection point between the third switch S3 and the fourth switch S4. The first end of the secondary winding 53b is electrically connected to a connection point between the seventh switch S7 and the eighth switch S8, while the second end of the secondary winding 53b is electrically connected to a connection point between the fifth switch S5 and the sixth switch S6.

The second power converter 70 and the third power converter 100 are implemented by isolated DC-DC converters. Similarly to the first power converter 40, each the second power converter 70 and the third power converter 100 includes the first to eighth switches, the primary capacitor, the secondary capacitor, and the transformer. In the present embodiment, the configurations of the first power converter 40, the second power converter 70, and the third power converter 100 are basically the same. Detailed descriptions of the second power converter 70 and the third power converter 100 are, therefore, omitted here.

The power conversion system 10 includes the battery monitoring devices 32, 62, and 92. The battery monitoring devices 32, 62, and 92 are provided one for each of the storage batteries 31, 61, and 91. For example, the first battery monitoring device 32 detects terminal voltages, currents, internal resistances, and SOCs of the respective battery cells constituting the first storage battery 31 to determine the state of the first storage battery 31. The second battery monitoring device 62 monitors the state of the second storage battery 61 similarly to the first battery monitoring device 32. The third battery monitoring device 92 monitors the state of the third storage battery 91 similarly to the first battery monitoring device 32. Values measured by the respective battery monitoring devices 32, 62, and 92 are input to the control device 16 installed in the power conversion system 10.

The power conversion system 10 includes the voltage sensors 45, 75, and 105 and the current sensors 46, 76, and 106. The voltage sensors 45, 75, and 105 and the current sensors 46, 76, and 106 are provided corresponding to the respective storage battery modules 30, 60, and 90. The respective voltage sensors 45, 75, and 105 detect the secondary terminal voltages Vo1, Vo2, and Vo3 of the corresponding power converters 40, 70, and 100. The respective current sensors 46, 76, and 106 detect the secondary currents Io1, Io2, and Io3 flowing on the secondary sides of the corresponding power converters 40, 70, and 100. Specifically, taking the first power converter 40 as an example, as shown in Fig. 2, the voltage sensor 45 measures a voltage developed at the secondary capacitor 52. The current sensor 46 measures a current flowing to the secondary positive terminal 43 and the first end of the secondary capacitor 52. Values measured by the respective sensors 45, 46, 75, 76, 105, and 106 are input to the control device 16.

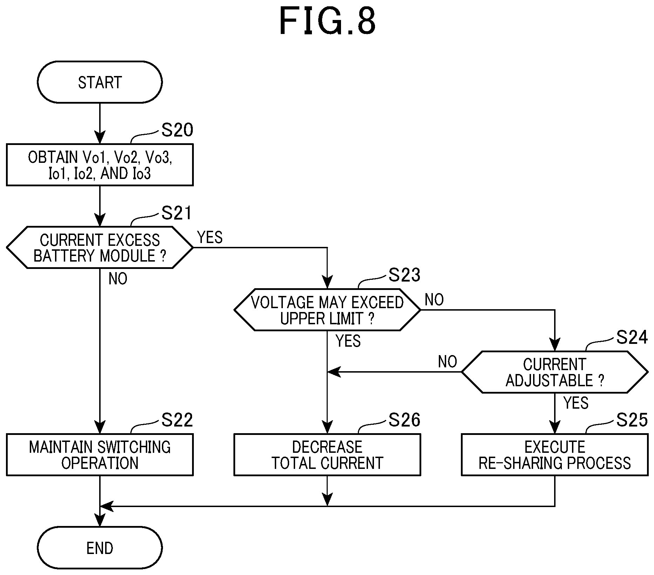

The control device 16 is implemented by an ECU (electronic control unit) and is mainly configured by a microcomputer including a CPU and various memories. Functions performed by the microcomputer may be provided by software recorded in a tangible memory device and a computer executing the software, by software alone, by hardware alone, or by a combination thereof. For example, when the microcomputer is provided by an electronic circuit in the form of hardware, the microcomputer may be provided by a digital circuit including a large number of logic circuits or by an analog circuit. For example, the microcomputer executes a program stored in a non-transitory tangible storage medium serving as a storage unit included therein. The program includes, for example, programs of processes shown in Figs. 3 and 8. When the program is executed, a method corresponding to the program is executed. The storage unit is, for example, a nonvolatile memory. The program stored in the storage unit may be downloaded and updated via a communication network such as the Internet, for example, by OTA (Over The Air).

The control device 16 controls switching operations of the power converters 40, 70, and 100 in a switching control mode. In the switching control mode, the control device 16 controls flows of module currents from the respective storage battery modules 30, 60, and 90 so as to cause a requested current to flow in the power conversion system 10. The module currents are specifically the secondary currents Io1, Io2, and Io3 flowing from the respective storage battery modules 30, 60, and 90. The control device 16 sets current command values (i.e., target values) of the secondary currents Io1, Io2, and Io3 for the respective storage battery modules 30, 60, and 90 using the requested current for the power conversion system 10. The control device 16 performs the switching control of the power converters 40, 70, and 100 based on the respective set current command values in order to distribute a share of the requested current to the respective storage battery modules 30, 60, and 90.

For example, the control device 16 sets the current command values as a function of the requested current corresponding to a driving state of the rotating electrical machine 23. Specifically, when a request arises to cause a current to flow from the power conversion system 10 to the rotating electrical machine 23 in order to drive the rotating electrical machine 23 in a power running mode (i.e., a motor mode), the control device 16 sets the current command values for discharging at least one of the storage batteries 31, 61, and 91. Alternatively, when a request is produced to cause a current to flow from the rotating electrical machine 23 to the power conversion system 10 in order to drive the rotating electrical machine 23 in a regenerative mode, the control device 16 works to set the current command values for charging at least one of the storage batteries 31, 61, and 91.

For example, the control device 16 sets the current command values based on the requested current corresponding to states of the storage batteries 31, 61, and 91. More specifically, a request may arise to transfer electric power among the storage batteries 31, 61, and 91 in order to control amounts of stored electricity (for example, SOC) of the storage batteries 31, 61, and 91. In this case, the control device 16 sets the current command values for discharging a part of the storage batteries 31, 61, and 91 and charging at least a part of the remaining storage batteries 31, 61, and 91.

It should be noted that, for example, a request may also arise to transfer electric power between the rotating electrical machine 23 and the storage batteries 31, 61, and 91 in order to drive the rotating electrical machine 23 in the power running mode or the regenerative mode and to control the amounts of stored electricity of the storage batteries 31, 61, and 91. In this case as well, the control device 16 sets the current command values for discharging a part of the storage batteries 31, 61, and 91 and charging at least a part of the remaining storage batteries 31, 61, and 91. Control of the amounts of stored electricity of the storage batteries 31, 61, and 91 is performed, for example, in order to equalize the amounts of stored electricity of the storage batteries 31, 61, and 91 or to charge or discharge only a specific storage battery among the storage batteries 31, 61, and 91.

Meanwhile, there is a concern that an overvoltage may be applied to the secondary terminal pair of at least one of the power converters 40, 70, and 100 due to an inappropriate share of the requested current in the respective storage battery modules 30, 60, and 90. In this case, there is a concern that the power conversion system 10 in which the respective storage battery modules 30, 60, and 90 are electrically connected in parallel can not be appropriately realized.

Therefore, the control device 16 performs overvoltage suppression control during execution of the switching control for the power converters 40, 70, and 100. The overvoltage suppression control is control for suppressing application of an overvoltage to the secondary terminal pairs of the power converters 40, 70, and 100.

More specifically, in the overvoltage suppression control, the control device 16 obtains the secondary terminal voltages Vo1, Vo2, and Vo3 developed at the respective storage battery modules 30, 60, and 90. The control device 16 then controls switching operations of the power converters 40, 70, and 100 so as to suppress the obtained secondary terminal voltages Vo1, Vo2, and Vo3 at the respective storage battery modules 30, 60, and 90 from exceeding the upper limit voltage VT. The upper limit voltage VT is determined according to the secondary-side rated voltages at the power converters 40, 70, and 100, and is set to, for example, 80% to 90% of the secondary-side rated voltage or 90% to 100% of the secondary-side rated voltage.

In the present embodiment, in the overvoltage suppression control, power adjustment for suppressing application of an overvoltage to the secondary terminal pairs of the power converters 40, 70, and 100 may be achieved by the respective storage battery modules 30, 60, and 90. Accordingly, while responding to a request for the power conversion system 10, it is possible to suppress application of an overvoltage to the power converters 40, 70, and 100. This enables the power conversion system 10 in which the respective storage battery modules 30, 60, and 90 are electrically connected in parallel to be appropriately realized.

In the respective storage battery modules 30, 60, and 90, the primary terminal pairs of the power converters 40, 70, and 100 are, as described above, electrically connected in parallel with the storage batteries 31, 61, and 91, respectively, while the secondary terminal pairs are electrically connected in series with the storage batteries 31, 61, and 91, respectively. This configuration leads to a risk that the rated voltages at the power converters 40, 70, and 100 may be set lower than the voltages at the storage batteries 31, 61, and 91, or the secondary terminal voltages Vo1, Vo2, and Vo3 at the power converters 40, 70, and 100 may be influenced by the voltages of the corresponding storage batteries 31, 61, and 91. This results in a higher possibility that an overvoltage is applied to the secondary terminal pairs of the power converters 40, 70, and 100. Therefore, there is a significant advantage in performing the overvoltage suppression control during execution of the switching control.

Next, the overvoltage suppression control will be specifically described.

The control device 16 includes the voltage obtainer 16a, the voltage determiner 16b, and the controller 16c. The voltage obtainer 16a acquires the secondary terminal voltages Vo1, Vo2, and Vo3 at the respective storage battery modules 30, 60, and 90. In the present embodiment, the voltage obtainer 16a derives, as the secondary terminal voltages Vo1, Vo2, and Vo3 at the respective storage battery modules 30, 60, and 90,
- voltages detected by the voltage sensors 45, 75, and 105, and
- calculated values of the secondary terminal voltages Vo1, Vo2, and Vo3 at the respective storage battery modules 30, 60, and 90.

The secondary terminal voltages Vo1, Vo2, and Vo3 at the respective storage battery modules 30, 60, and 90 may be calculated using outputs from the corresponding battery monitoring devices 32, 62, and 92. Specifically, the voltages Vbat1, Vbat2, and Vbat3 at the storage batteries 31, 61, and 91 measured by the respective battery monitoring devices 32, 62, and 92 may be used for calculation of the secondary terminal voltages Vo1, Vo2, and Vo3 of the corresponding storage battery modules 30, 60, and 90. Alternatively, battery parameters derived by the respective battery monitoring devices 32, 62, and 92 may be used for calculation of the secondary-side terminal voltages Vo1, Vo2, and Vo3 at the corresponding storage battery modules 30, 60, and 90. The battery parameters are parameters having correlations with the voltages Vbat1, Vbat2, and Vbat3 at the storage batteries 31, 61, and 91, such as the currents Ibat1, Ibat2, and Ibat3 flowing through the respective storage batteries 31, 61, and 91, internal resistances, or SOCs of the storage batteries 31, 61, and 91.

The voltage determiner 16b determines whether there is a voltage excess module based on the acquired secondary terminal voltages Vo1, Vo2, and Vo3 at the respective storage battery modules 30, 60, and 90. The voltage-excess battery module is one of the respective storage battery modules 30, 60, and 90, in which a magnitude of the secondary terminal voltage Vo1, Vo2, or Vo3 exceeds the upper limit voltage VT.

The power conversion system 10 in this embodiment is capable of operating in the overvoltage suppression control to derive voltages measured by the respective voltage sensors 45, 75, and 105 are acquired. This enables the secondary terminal voltages Vo1, Vo2, and Vo3 developed at the respective storage battery modules 30, 60, and 90 to be appropriately derived. It is, therefore, possible to realize a configuration suitable for determining whether there is the voltage-excess battery module.

In the overvoltage suppression control, the power conversion system 10 is capable of deriving calculated values of the respective secondary terminal voltages Vo1, Vo2, and Vo3. It is, therefore, possible to improve the accuracy of determining whether there is the voltage-excess battery module.

The controller 16c performs a re-sharing task or process when it is determined that there is the voltage-excess battery module. The re-sharing process is a task for redistributing the share of the requested current to the respective storage battery modules 30, 60, and 90. In the re-sharing process, the controller 16c changes the secondary current so as to reduce the magnitude of the secondary terminal voltage at the voltage-excess battery module. The controller 16c then changes the secondary current in at least one of the storage battery modules 30, 60, and 90 other than the voltage-excess battery module as a function of a change in amount of the secondary current in the voltage-excess battery module. For example, in the re-sharing process, the controller 16c changes the secondary currents in the respective storage battery modules 30, 60, and 90 by resetting the current command values used in the switching control for the power converters 40, 70, and 100.

By reducing the magnitude of the secondary terminal voltage at the voltage-excess battery module, it is possible to appropriately suppress application of an overvoltage to one of the power converters 40, 70, and 100 which corresponds to the voltage-excess battery module. Further, by changing the secondary currents in the storage battery modules other than the voltage-excess battery module among the storage battery modules 30, 60, and 90, it is possible to compensate for the change in amount of the secondary current in the voltage-excess battery module. Therefore, while responding to a request for the power conversion system 10, it is possible to appropriately suppress application of an overvoltage to the power converters 40, 70, and 100.

Fig. 3 is a flowchart showing a sequence of steps of the overvoltage suppression control task or program executed by the control device 16. This task is executed cyclically at given intervals during the switching control for the power converters 40, 70, and 100.

After entering the program, the routine proceeds to step S10 wherein the voltage obtainer 16a obtains the secondary terminal voltages Vo1, Vo2, and Vo3 at the storage battery modules 30, 60, and 90 respectively. The routine then proceeds to step S11 wherein the voltage determiner 16b determines whether there is a voltage excess module using the secondary terminal voltages Vo1, Vo2, and Vo3. If a NO answer is obtained in the step S11, then the routine proceeds to step S12. Alternatively, if a YES answer is obtained, then the routine proceeds to step S13.

In the step S12, the controller 16c continues the switching control in each of the power converters 40, 70, and 100. This causes the secondary currents Io1, Io2, and Io3 to be maintained in the storage battery modules 30, 60, and 90, respectively, so that a state in which no overvoltage occurs is maintained.

In the step S13, the controller 16c performs the re-sharing task or process. Hereinafter, the content of the re-sharing task will be specifically described for each state of the storage batteries 31, 61, and 91 respectively.

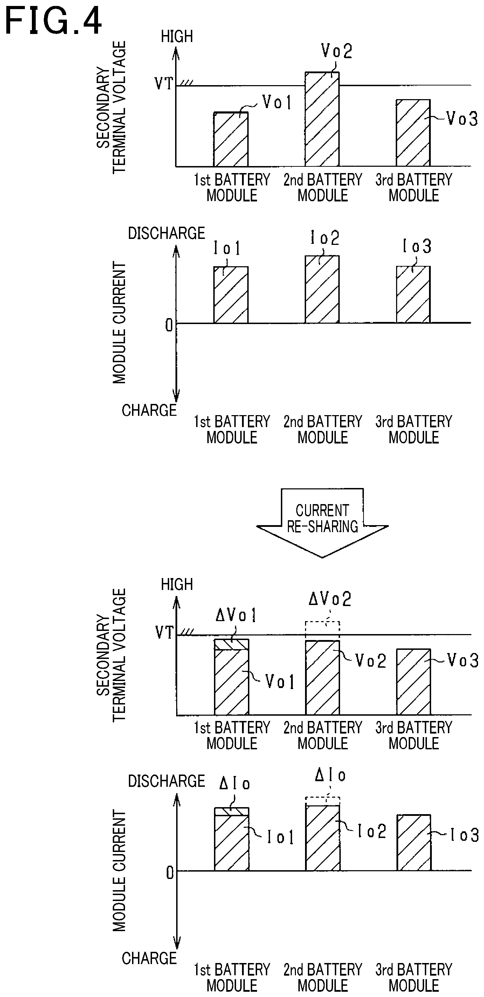

Figs. 4 to 7 show a comparison of the secondary terminal voltages Vo1, Vo2, and Vo3 and the secondary currents Io1, Io2, and Io3 of the storage battery modules 30, 60, and 90 before and after execution of the re-sharing process. Before the execution of the re-sharing process, the secondary terminal voltages Vo1 and Vo3 at the first and third storage battery modules 30 and 90 respectively are equal to or lower than the upper limit voltage VT, while the secondary terminal voltage Vo2 at the second storage battery module 60 exceeds the upper limit voltage VT. Therefore, among the storage battery modules 30, 60, and 90, the second storage battery module 60 is the voltage-excess battery module.

For example, a factor causing the occurrence of the voltage-excess battery module may be a difference in characteristics, such as voltages, among the storage batteries 31, 61, and 91. More specifically, in a low voltage battery module that is one of the storage battery modules 30, 60, and 90 in which the voltage at the storage battery 31, 61, or 91 is low, a difference between a voltage between the paths 13 and 14 and a voltage at the low voltage battery module becomes high. This leads to a risk that the secondary terminal voltage at the low voltage battery module may exceed the upper limit voltage VT. The voltages developed at the storage batteries 31, 61, and 91 may become different states due to, for example, being different in initial states or changes in internal resistance due to deterioration of the storage batteries 31, 61, and 91. For example, the voltage developed at a higher internal resistance battery that is one of the storage batteries 31, 61, and 91 which has a higher internal resistance becomes lower than remaining lower internal storage batteries among the storage batteries 31, 61, and 91 during discharge even when discharge currents having the same magnitude flow from the storage batteries 31, 61, and 91.

Fig. 4 demonstrates a case in which a request to drive the rotating electric machine 23 in the power running mode is generated. In this case, the storage battery modules 30, 60, and 90 share and output a current supplied from the power conversion system 10 to the inverter 22. This causes the storage batteries 31, 61, and 91 to be discharged.

The controller 16c performs the switching control for the second power converter 70 so as to reduce the magnitude of the secondary current Io2 in the second storage battery module 60 by an adjustment value ΔIo. This results in a decrease in amount of current discharged from the second storage battery 61. This reduces a voltage drop in the second storage battery 61 that is being electrically discharged due to an internal resistance thereof, so that the voltage at the second storage battery 61 becomes higher. Therefore, a voltage difference between the voltage between the paths 13 and 14 and the voltage at the second storage battery 61 is reduced. Accordingly, after the execution of the re-sharing process, the secondary terminal voltage Vo2 at the second storage battery module 60 is reduced by the adjustment value ΔVo2, and the secondary terminal voltage Vo2 becomes equal to or lower than the upper limit voltage VT.

The controller 16c also performs switching control for the first power converter 40 so as to increase the magnitude of the secondary current Io1 in the first storage battery module 30 by the adjustment value ΔIo. This maintains the magnitude of the current flowing from the power conversion system 10 to the inverter 22 before and after the execution of the re-sharing process. Therefore, in the switching control for discharging the storage batteries 31, 61, and 91, it is possible to suppress the occurrence of overvoltage while actuating the rotating electric machine 23 in the same power running mode as before the execution of the re-sharing process.

The controller 16c may increase the magnitude of the secondary current Io3 in the third storage battery module 90 to compensate for the adjustment value ΔIo (specifically, a reduction amount) of the secondary current Io2 in the second storage battery module 60. The controller 16c may alternatively increase the magnitudes of the secondary currents Io1 and Io3 in the first and third storage battery modules 30 and 90 to compensate for the adjustment value ΔIo (specifically, a reduction amount) of the secondary current Io2 in the second storage battery module 60.

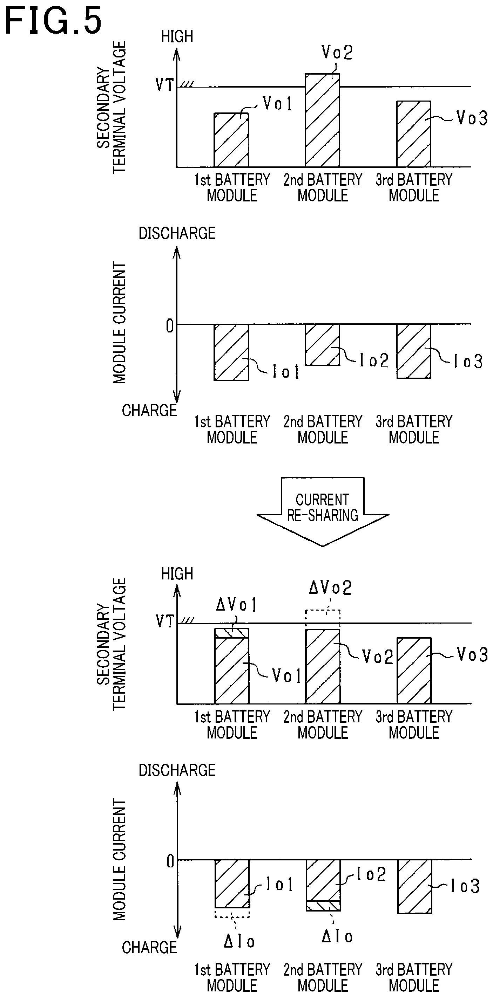

Fig. 5 demonstrates a case in which a request to drive the rotating electric machine 23 in regenerative operation occurs. In this case, the storage battery modules 30, 60, and 90 share the current flowing from the inverter 22 to the power conversion system 10, thereby electrically charging the storage batteries 31, 61, and 91.

The controller 16c performs switching control for the second power converter 70 to increase the magnitude of the secondary current Io2 in the second storage battery module 60 by the adjustment value ΔIo. This increases the charging current for the second storage battery 61. This causes an increase in voltage drop in the second storage battery 61 due to the internal resistance thereof during charging and also causes an increase in the voltage at the second storage battery 61 during charging. This results in a reduction in voltage difference between the voltage appearing between the paths 13 and 14 and the voltage at the second storage battery 61. Accordingly, after execution of the re-sharing process, the secondary terminal voltage Vo2 at the second storage battery module 60 is reduced, so that the secondary terminal voltage Vo2 becomes equal to or less than the upper limit voltage VT.

The controller 16c also performs switching control for the first power converter 40 to reduce the magnitude of the secondary current Io1 in the first storage battery module 30 by the adjustment value ΔIo. This maintains the magnitude of the current flowing from the inverter 22 to the power conversion system 10 before and after the redistribution process. This enables occurrence of overvoltage to be suppressed in switching control for charging the storage batteries 31, 61, and 91 while executing regenerative driving of the rotating electric machine 23 in the same manner as before execution of the redistribution process.

The controller 16c may reduce the magnitudes of the secondary current Io1 or Io3 in at least one of the first and third storage battery modules 30 and 90 to compensate for the adjustment value ΔIo (specifically, an increase amount) of the secondary current Io2 in the second storage battery module 60.

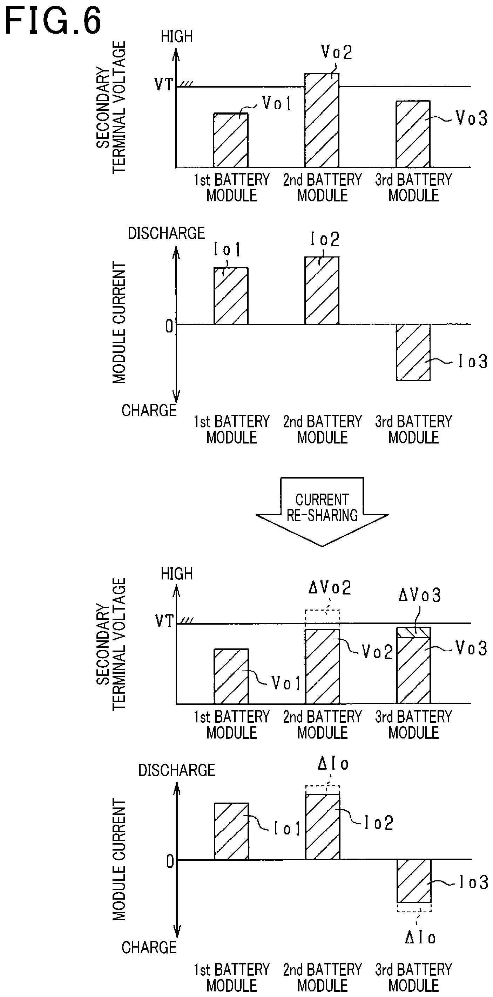

Fig. 6 demonstrates a case in which a request is produced to drive the rotating electric machine 23 in the power running mode and to increase an amount of electricity stored in the third storage battery 91. In this case, the first and second storage battery modules 30 and 60 share and output the current supplied to the inverter 22 and the third storage battery module 90. This causes the first and second storage batteries 31 and 61 to be discharged and the third storage battery 91 to be charged.

The controller 16c performs switching control for the second power converter 70 to reduce the magnitude of the secondary current Io2 in the second storage battery module 60 by the adjustment value ΔIo. This causes, similarly to the case described with reference to Fig. 4, the secondary terminal voltage Vo2 in the second storage battery module 60 to become equal to or less than the upper limit voltage VT.

The controller 16c also performs switching control for the third power converter 100 to reduce the magnitude of the secondary current Io3 in the third storage battery module 90 by the adjustment value ΔIo. This causes the magnitude of the current flowing from the power conversion system 10 to the inverter 22 to be maintained before and after the redistribution process. This enables occurrence of overvoltage to be suppressed in the switching control for discharging the first and second storage batteries 31 and 61 and charging the third storage battery 91 while actuating the rotating electric machine 23 in the same power running mode as before execution of the re-sharing process.

The controller 16c may increase the magnitude of the secondary current Io1 in the first storage battery module 30 to compensate for the adjustment value ΔIo (i.e., a reduction amount) of the secondary current Io2 in the second storage battery module 60. The controller 16c may also increase the magnitude of the secondary current Io1 in the first storage battery module 30 and reduce the magnitude of the secondary current Io3 in the third storage battery module 90 to compensate for the adjustment value ΔIo of the secondary current Io2 in the second storage battery module 60.

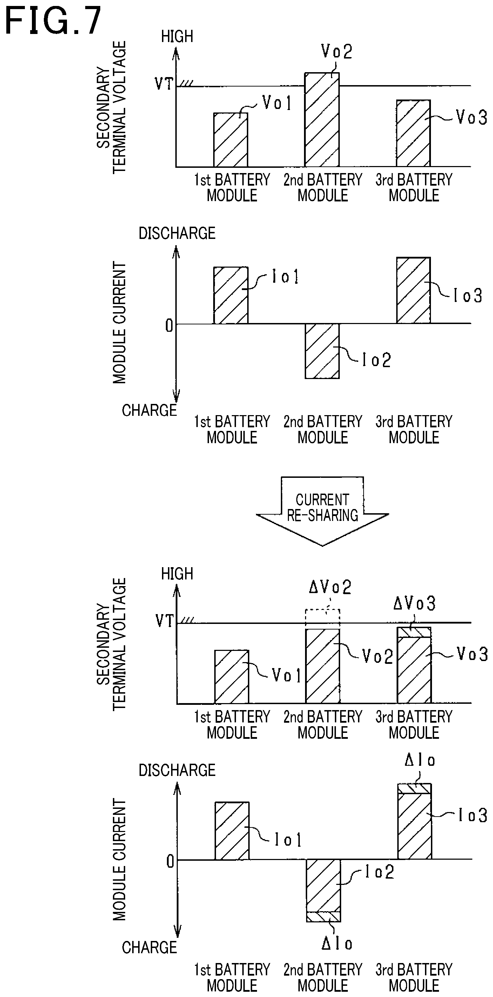

Fig. 7 demonstrates a case in which a request is produced to drive the rotating electric machine 23 in the power running mode and to increase an amount of electricity stored in the second storage battery 61. In this case, the first and third storage battery modules 30 and 90 share and output the current supplied to the inverter 22 and the second storage battery module 60. This causes the first and third storage batteries 31 and 91 to be discharged and the second storage battery 61 to be charged.

The controller 16c performs switching control for the second power converter 70 to increase the magnitude of the secondary current Io2 in the second storage battery module 60 by the adjustment value ΔIo. This causes, similarly to the case described with reference to Fig. 5, the secondary terminal voltage Vo2 in the second storage battery module 60 to become equal to or less than the upper limit voltage VT.

The controller 16c also performs switching control for the third power converter 100 to increase the magnitude of the secondary current Io3 in the third storage battery module 90 by the adjustment value ΔIo. This maintains the magnitude of the current flowing from the power conversion system 10 to the inverter 22 before and after the redistribution process. This enables occurrence of overvoltage to be suppressed in the switching control for discharging the first and third storage batteries 31 and 91 and charging the second storage battery 61 while actuating the rotating electric machine 23 in the same power running mode as before execution of the redistribution process.

The controller 16c may increase the secondary current Io1 or Io3 in at least one of the first and third storage battery modules 30 and 90 to compensate for the adjustment value ΔIo (i.e., an increase amount) of the secondary current Io2 in the second storage battery module 60.

In the re-sharing processes described with reference to Figs. 4 to 7, the secondary terminal voltage increases at either one of the first and third storage battery modules 30 and 90 due to a change in the secondary current (see ΔVo1 and ΔVo3). Accordingly, the controller 16c may select the storage battery module having the lower secondary terminal voltage Vo1 or Vo3 from among the first and third storage battery modules 30 and 90 and may change the magnitude of the secondary current in the selected storage battery module. As a result, it is possible to appropriately select the storage battery module in which the secondary terminal voltage is to be increased and execute processing for changing the secondary currents Io1, Io2, and/or Io3 of the storage battery modules 30, 60, and/or 90.

There is concern that an overcurrent may flow in at least one of the storage battery modules 30, 60, and 90 during execution of the switching control therefore. For example, when voltage-excess suppression control is executed, it may cause the magnitude of the secondary current in the storage battery module other than the voltage-excess storage battery module among the storage battery modules 30, 60, and 90 to be increased in order to compensate for the adjustment amount of the secondary current for the voltage-excess storage battery module. This leads to a risk that an overcurrent may flow in the storage battery module in which the magnitude of the secondary current is increased.

In order to alleviate the above risk, the control device 16 works to perform the overcurrent suppression control during execution of the switching control. The overcurrent suppression control is a task for suppressing an overcurrent from flowing through the secondary terminal pairs of the power converters 40, 70, and 100.

Next, the overcurrent suppression control will be described in detail.

The control device 16 includes the current obtainer 16d, the current determiner 16e, and the re-sharing determiner 16f. The current obtainer 16d acquires the secondary currents Io1, Io2, and Io3 of the storage battery modules 30, 60, and 90. For instance, the current obtainer 16d may analyze outputs from the current sensors 46, 76, and 106 to determine the secondary currents Io1, Io2, and Io3 in the storage battery modules 30, 60, and 90.

The current determiner 16e determines whether a current-excess battery module exists using the obtained secondary currents Io1, Io2, and Io3 flowing from the storage battery modules 30, 60, and 90. The current-excess battery module is the storage battery module in which the magnitude of the acquired secondary current Io1, Io2, or Io3 exceeds the upper limit current IT among the storage battery modules 30, 60, and 90. The upper limit current IT is determined in accordance with at least one of the secondary rated currents in the power converters 40, 70, and 100 or the rated currents in the storage batteries 31, 61, and 91. For example, the upper limit current IT is set to 80% to 90% or 90% to 100% of the secondary rated current.

The re-sharing determiner 16f determines whether to execute the re-sharing process based on the obtained secondary terminal voltages Vo1, Vo2, and Vo3 when it is determined that a current-excess battery module exists. The determination operation performed by the re-sharing determiner 16f will be described later.

When it is determined that the re-sharing process is required to be executed, the controller 16c starts performing the re-sharing process. The controller 16c then performs switching control for the power converters 40, 70, and 100 so that the excess amount of the secondary current over the upper limit current IT in the current-excess battery module is distributed to the storage battery module other than the current-excess battery module among the storage battery modules 30, 60, and 90.

Alternatively, when it is determined that the re-sharing process is not required to be executed, the controller 16c performs a current reducing process. Specifically, the controller 16c performs switching control for the power converters 40, 70, and 100 to reduce a total amount of the secondary currents Io1, Io2, and Io3 in the storage battery modules 30, 60, and 90.

Fig. 8 is a flowchart which shows a sequence of steps or overcurrent suppression control program executed by the control device 16. This program is repeatedly executed at a predetermined cycle during execution of the switching control for the power converters 40, 70, and 100 in parallel with the overvoltage suppression control.

After entering the program, the routine proceeds to step S20 wherein the voltage obtainer 16a derives the secondary terminal voltages Vo1, Vo2, and Vo3 developed at the storage battery modules 30, 60, and 90. Simultaneously, the current obtainer 16d derives the secondary currents Io1, Io2, and Io3 flowing from the storage battery modules 30, 60, and 90.

The routine proceeds to step S21 wherein the current determiner 16e analyzes the secondary currents Io1, Io2, and Io3 derived in step S20 to determine whether there is a current-excess battery module among the storage battery modules 30, 60, and 90. If a NO answer is obtained, then the routine proceeds to step S22 wherein the controller 16c maintains the switching control being executed for the power converters 40, 70, and 100. This keeps the secondary currents Io1, Io2, and Io3 in the storage battery modules 30, 60, and 90 as they are, thereby causing a state in which no overcurrent occurs to continue. Alternatively, if a YES answer is obtained in step S11 of Fig. 3 even when the secondary currents Io1, Io2, and Io3 are kept as they are in step S22, the re-sharing process may be executed in the overvoltage suppression process to change the secondary currents Io1, Io2, and Io3.

If a YES answer is obtained in step S21, then the routine proceeds to step S23 wherein the re-sharing determiner 16f analyzes the secondary terminal voltages Vo1, Vo2, and Vo3 at the storage battery modules 30, 60, and 90 to determine whether there is a possibility that each of the secondary terminal voltages Vo1, Vo2, and Vo3 exceeds the upper limit voltage VT. It is noted that it is possible to change each of the secondary terminal voltages Vo1, Vo2, and Vo3 from current levels to the upper limit voltage VT. Accordingly, the re-sharing determiner 16f in this embodiment is configured to calculate remaining voltages that the storage battery modules 30, 60, and 90 are enabled to develop until the secondary terminal voltages Vo1, Vo2, and Vo3 at the storage battery modules 30, 60, and 90 reach the upper limit voltage VT. The re-sharing determiner 16f determines, based on the calculated remaining voltages, whether there is a possibility that the secondary terminal voltages Vo1, Vo2, and Vo3 will exceed the upper limit voltage VT due to execution of the re-sharing process.

For example, when determining that a remaining voltage exists (for example, the remaining voltage is higher than 0) in the storage battery module in which a magnitude of the secondary terminal voltage is increased by execution of the re-sharing process among the storage battery modules 30, 60, and 90, the re-sharing determiner 16f makes a negative determination (i.e., NO answer) in step S23. Alternatively, when determining that no remaining voltage exists (for example, the remaining voltage is 0) in the storage battery module in which the magnitude of the secondary terminal voltage is increased by execution of the redistribution process among the storage battery modules 30, 60, and 90, the re-sharing determiner 16f makes an affirmative determination (i.e., YES answer) in step S23.

If a NO answer is obtained in step S23, meaning that the remaining voltage exists, then the routine proceeds to step S24 wherein the re-sharing determiner 16f analyzes the secondary currents Io1, Io2, and Io3 derived in step S20 to determine whether it is possible to adjust present values of the secondary currents Io1, Io2, and Io3 in the storage battery modules 30, 60, and 90 in the re-sharing process. It is noted that the secondary currents Io1, Io2, and Io3 are adjustable within a range from present values thereof until reaching the upper limit current IT. Specifically, the re-sharing determiner 16f calculates, for each of the storage battery modules 30, 60, and 90, a magnitude or value of current adjustable until the values of the secondary currents Io1, Io2, and Io3 derived in step S20 reach the upper limit current IT. The re-sharing determiner 16f then determines whether it is possible to adjust the present values of the secondary currents Io1, Io2, and Io3 in the re-sharing process based on the calculated adjustable currents.

For example, when it is determined that the adjustable current exists (for example, the adjustable current is greater than 0) in the storage battery module in which a magnitude of the secondary current is increased by execution of the re-sharing process among the storage battery modules 30, 60, and 90, the re-sharing determiner 16f makes an affirmative determination (i.e., a YES answer) in step S24. Alternatively, when it is determined that no adjustable current exists (for example, the adjustable current is 0) in the storage battery module in which the magnitude of the secondary current is increased by execution of the redistribution process among the storage battery modules 30, 60, and 90, the re-sharing determiner 16f makes a negative determination (i.e., a NO answer) in step S24.

If a YES answer is obtained in step S23 or a NO answer is obtained in step S24, meaning that the re-sharing determiner 16f concludes that the re-sharing process should not be executed, then the routine proceeds to step S26 wherein the controller 16c execute the current-reducing process. Note that, if a NO answer is obtained in step S23 without performing the operation of step S24, the re-sharing determiner 16f may determine to execute the re-sharing process.

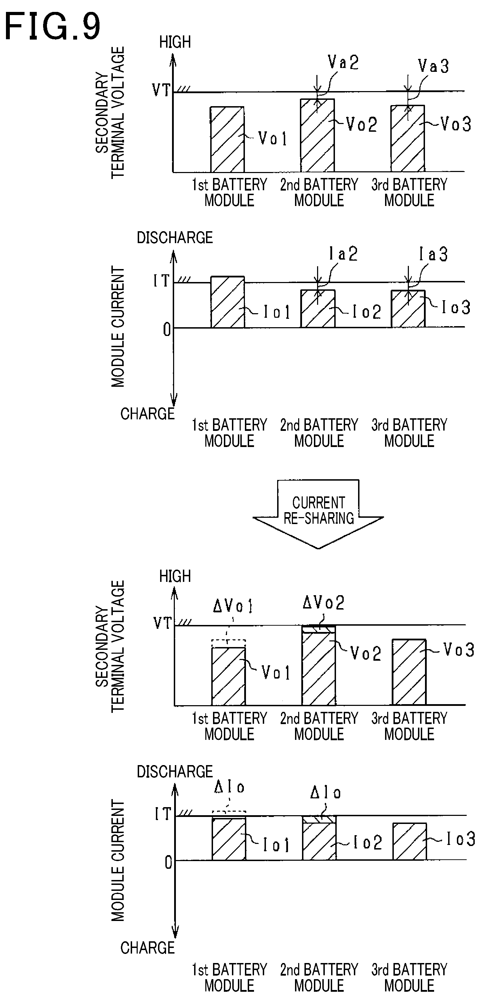

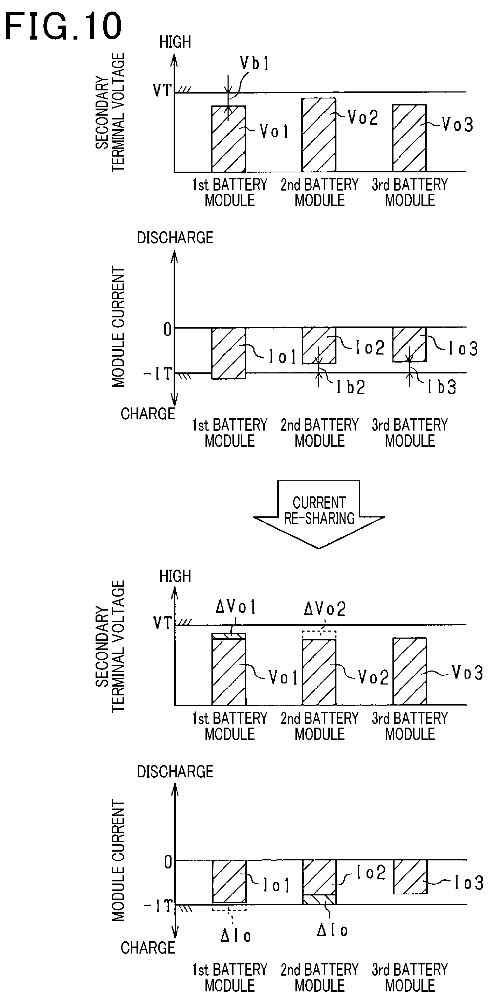

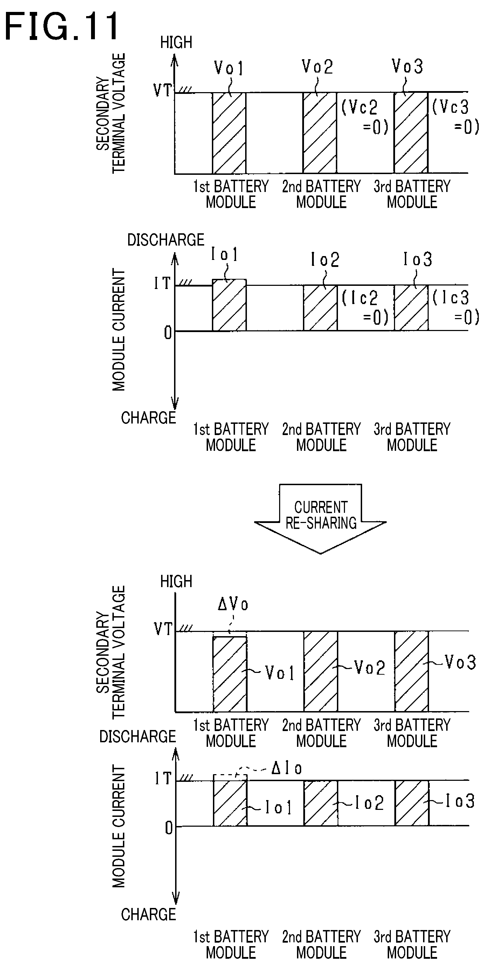

Figs. 9, 10, and 11 demonstrate examples of overcurrent suppression control. In Fig. 9 to Fig. 11, the first storage battery module 30 among the storage battery modules 30, 60, and 90 is defined as a current-excess battery module. In Figs. 9 and 11, the storage batteries 31, 61, and 91 are discharged. In Fig. 10, the storage batteries 31, 61, and 91 are charged.

In the example of Fig. 9, the re-sharing determiner 16f determines that the remaining voltages Va2 and Va3 exist in the second and third storage battery modules 60 and 90, and makes a negative determination (i.e., a NO answer) in step S23 of Fig. 8 described above. The re-sharing determiner 16f also determines that adjustable currents Ia2 and Ia3 exist in the second and third storage battery modules 60 and 90, and makes an affirmative determination (i.e., a YES answer) in step S24 of Fig. 8 described above. Therefore, the controller 16c executes the re-sharing process.

In the re-sharing process, the controller 16c performs switching control of the first power converter 40 so that the magnitude of the secondary current Io1 in the first storage battery module 30 is reduced by the adjustment value ΔIo. Specifically, the controller 16c adjusts the secondary current Io1 in the first storage battery module 30 within a range in which the secondary terminal voltages Vo2 and Vo3 of the second and third storage battery modules 60 and 90, which are required to compensate for the adjustment value ΔIo, do not exceed the upper limit voltage VT. In the example of Fig. 9, the controller 16c sets the adjustment value ΔIo of the secondary current Io1 to be larger than an excess amount of the secondary current Io1 with respect to the upper limit current IT. Therefore, after execution of the re-sharing process, the magnitude of the secondary current Io1 in the first storage battery module 30 is, as clearly illustrated in a lower part of Fig. 9, set to be equal to or less than the upper limit current IT.

Further, in the re-sharing process, the controller 16c also distributes the adjustment value ΔIo of the secondary current Io1 in the first storage battery module 30 to the second storage battery module 60. Specifically, the controller 16c performs switching control for the second power converter 70 so that the magnitude of the secondary current Io2 in the second storage battery module 60 is increased by the adjustment value ΔIo. This causes the secondary terminal voltage Vo2 to be elevated by ΔVo2. In the example of Fig. 9, the increased value ΔVo2 of the secondary terminal voltage Vo2 at the second storage battery module 60 is lower than the remaining voltage Va2. The adjustment value ΔIo of the secondary current Io2 is smaller than the adjustable current Ia2. Therefore, in the second storage battery module 60 after execution of the re-sharing process, the secondary terminal voltage Vo2 is set to be equal to or less than the upper limit voltage VT, and the magnitude of the secondary current Io2 is set to be equal to or less than the upper limit current IT.

In the example of Fig. 10, the re-sharing determiner 16f determines that the remaining voltage Vb1 exists in the first storage battery module 30, and makes a negative determination (i.e., a NO answer) in step S23 of Fig. 8 described above. The re-sharing determiner 16f also determines that adjustable currents Ib2 and Ib3 exist in the second and third storage battery modules 60 and 90, and makes an affirmative determination (i.e., a YES answer) in step S24 of Fig. 8 described above. Therefore, the controller 16c executes the re-sharing process.

In the re-sharing process, the controller 16c performs switching control for the first power converter 40 so that the magnitude of the secondary current Io1 in the first storage battery module 30 is reduced by the adjustment value ΔIo. In the example of Fig. 10, the controller 16c sets the adjustment value ΔIo of the secondary current Io1 to be larger than an excess amount of the secondary current Io1 with respect to the upper limit current IT. Therefore, after execution of the re-sharing process, the magnitude of the secondary current Io1 of the first storage battery module 30, as clearly illustrated in a lower part of Fig. 10, is set to be equal to or less than the upper limit current IT. Further, the controller 16c also adjusts the secondary current Io1 at the first storage battery module 30 within a range in which the secondary terminal voltage Vo1 at the first storage battery module 30 does not exceed the upper limit voltage VT. In the example of Fig. 10, an increased value ΔVo1 of the secondary terminal voltage Vo1 at the first storage battery module 30 is lower than the remaining voltage Vb1. Therefore, after execution of the re-sharing process, the secondary terminal voltage Vo1 at the first storage battery module 30 is, as clearly illustrated in the lower part of Fig. 10, equal to or less than the upper limit voltage VT.

Further, in the re-sharing process, the controller 16c distributes the adjustment value ΔIo of the secondary current Io1 in the first storage battery module 30 to the second storage battery module 60. Specifically, the controller 16c performs switching control for the second power converter 70 so that the magnitude of the secondary current Io2 in the second storage battery module 60 is increased by the adjustment value ΔIo. In the example of Fig. 10, the adjustment value ΔIo of the secondary current Io2 in the second storage battery module 60 is smaller than the adjustable current Ib2. Therefore, after execution of the re-sharing process, the magnitude of the secondary current Io2 is, as clearly illustrated in the lower part of Fig. 10, equal to or less than the upper limit current IT.

As apparent from the above discussion, the power conversion system 10 in this embodiment is capable of performing the re-sharing process in the overvoltage suppression control mode and also performing the re-sharing process in the overcurrent suppression control mode. This enables occurrence of overvoltage and overcurrent in the storage battery modules 30, 60, and 90 to be suppressed, thereby minimizing a risk of occurrence of inconvenience during execution of switching control for the power converters 40, 70, and 100.

In the example of Fig. 11, the re-sharing determiner 16f determines that no remaining voltages Vc2 and Vc3 exist in the second and third storage battery modules 60 and 90, and makes an affirmative determination (i.e., a YES answer) in step S23 of Fig. 8 described above. The re-sharing determiner 16f also determines that no adjustable currents Ic2 and Ic3 exist in the second and third storage battery modules 60 and 90, and makes a negative determination (i.e., a NO answer) in step S24 of Fig. 8 described above. Therefore, the controller 16c executes the current-reducing process.

In the current-reducing process, the controller 16c performs switching control for the first power converter 40 so that the magnitude of the secondary current Io1 in the first storage battery module 30 is reduced by the excess amount (i.e., the adjustment value ΔIo) with respect to the upper limit current IT. Further, the controller 16c continues the present switching control for the second and third power converters 70 and 100.

As can be seen in the example of Fig. 11, the power conversion system 10 is capable of reducing a total current of the secondary currents Io1, Io2, and Io3 flowing from the storage battery modules 30, 60, and 90. Accordingly, even when it is determined that it is impossible to execute the re-sharing process, the power conversion system 10 is capable of adjusting the magnitude of the secondary current in the current-excess battery module to be equal to or less than the upper limit current IT. Therefore, it is possible to realize a configuration suitable for suppressing occurrence of a situation in which an overcurrent flows in the storage battery modules 30, 60, and 90.

### MODIFICATIONS OF FIRST EMBODIMENT

The control device 16 only needs to suppress application of an overvoltage to at least one secondary terminal pair among the power converters 40, 70, and 100 in the overvoltage suppression control mode. In this case, the voltage obtainer 16a only needs to acquire at least one of the secondary terminal voltages Vo1, Vo2, and Vo3 appearing at the storage battery modules 30, 60, and 90.

The control device 16 only needs to suppress an overcurrent from flowing through at least one secondary terminal pair among the power converters 40, 70, and 100 in the overcurrent suppression control. In this case, the current obtainer 16d only needs to acquire at least one of the secondary currents Io1, Io2, and Io3 in the storage battery modules 30, 60, and 90.

The control device 16 may perform only the overvoltage suppression control, instead of performing both the overvoltage suppression control and the overcurrent suppression control.

In the switching control mode, the control device 16 may alternatively be designed to control the secondary current of any one or two of the storage battery modules 30, 60, and 90 and control the secondary terminal voltage Vo1, Vo2, and Vo3 at the remaining storage battery module, instead of controlling the secondary currents Io1, Io2, and Io3 in the storage battery modules 30, 60, and 90. For example, in the switching control mode, the control device 16 may control the secondary terminal voltage Vo1 at the first storage battery module 30 and control the secondary currents Io2 and Io3 in the second storage battery module 60 and the third storage battery module 90. In this case, the control device 16 may perform switching control for the first power converter 40 to bring the secondary terminal voltage Vo1 into agreement with a required voltage of the rotating electric machine 23.

An overcurrent in each of the storage battery modules 30, 60, and 90 may also appear when a request from the rotating electric machine 23 to the power conversion system 10 abruptly changes. Specifically, when the electrical power requested by the rotating electric machine 23 abruptly changes in a direction in which the requested power increases, an increase in the requested power may be borne by the storage battery module in which voltage control is performed among the storage battery modules 30, 60, and 90, thereby resulting in an increase in the secondary current therein. This leads to a risk that an overcurrent may flow in the storage battery module in which voltage control is performed among the storage battery modules 30, 60, and 90.

Execution of the re-sharing process in step S25 of Fig. 8 enables occurrence of an overcurrent in the current-excess battery module to be suppressed even when the storage battery module in which voltage control is performed among the storage battery modules 30, 60, and 90 becomes the current-excess battery module. In this case, the controller 16c increases a magnitude of the secondary current in the storage battery module that is other than the current-excess battery module among the storage battery modules 30, 60, and 90 and in which current control is performed. This results in a reduction in burden with respect to the requested power in the current-excess battery module and also in reduction in magnitude of the secondary current Io1 in the current-excess battery module, thereby suppressing occurrence of an overcurrent in the storage battery module in which voltage control is performed among the storage battery modules 30, 60, and 90. In addition, the overvoltage suppression control may be performed in addition to the above-described overcurrent suppression control. This enables occurrence of an overcurrent and an overvoltage in each of the storage battery modules 30, 60, and 90 to be suppressed.

In the present embodiment, the control device 16 may perform only the overcurrent suppression control, instead of performing both the overvoltage suppression control and the overcurrent suppression control.

In steps S12 and S13 of Fig. 3 and steps S22, S25, and S26 of the Fig. 8 described above, the controller 16c may control currents Ibat1, Ibat2, and Ibat3 flowing through the storage batteries 31, 61, and 91, instead of controlling the secondary currents Io1, Io2, and Io3 flowing from the storage battery modules 30, 60, and 90. Even in this case, the overvoltage suppression control and the overcurrent suppression control may be executed. In this example, the currents Ibat1, Ibat2, and Ibat3 flowing through the storage batteries 31, 61, and 91 correspond to "module currents."

The current obtainer 16d may obtain the currents Ibat1, Ibat2, and Ibat3 flowing through the storage batteries 31, 61, and 91, instead of obtaining the secondary currents Io1, Io2, and Io3 in the storage battery modules 30, 60, and 90. The currents Ibat1, Ibat2, and Ibat3 flowing through the storage batteries 31, 61, and 91 may be determined using currents measured by the battery monitoring devices 32, 62, and 92.

The current determiner 16e may analyze the currents Ibat1, Ibat2, and Ibat3 flowing through the storage batteries 31, 61, and 91 derived in the above manner to determine whether there is the current-excess battery module. In this case, the upper limit current IT may be determined in accordance with rated currents of the storage batteries 31, 61, and 91. For example, the upper limit current IT may be set to a value of 80% to 90% or preferably 90% to 100% of the rated currents in the storage batteries 31, 61, and 91.

The voltage obtainer 16a may obtain at least one of the secondary terminal voltages Vo1, Vo2, and Vo3 calculated using voltages measured by the voltage sensors 45, 75, and 105 and voltages measured by the battery monitoring devices 32, 62, and 92 and the secondary terminal voltages Vo1, Vo2, and Vo3 calculated using battery parameters of the battery monitoring devices 32, 62, and 92. When it is possible to derive the secondary terminal voltages Vo1, Vo2, and Vo3 using values measured by the battery monitoring devices 32, 62, and 92, the need for the voltage sensors 45, 75, and 105 installed in the power converters 40, 70, and 100 may be eliminated.

In the overvoltage suppression control mode, the controller 16c may change the secondary current in the storage battery module other than the voltage-excess battery module among the storage battery modules 30, 60, and 90 by an amount larger or smaller than the adjustment value ΔIo. This enables application of an overvoltage to secondary terminal pairs of the power converters 40, 70, and 100 to be suppressed, although the current flowing between the power conversion system 10 and the inverter 22 changes before and after execution of the redistribution process.

### SECOND EMBODIMENT

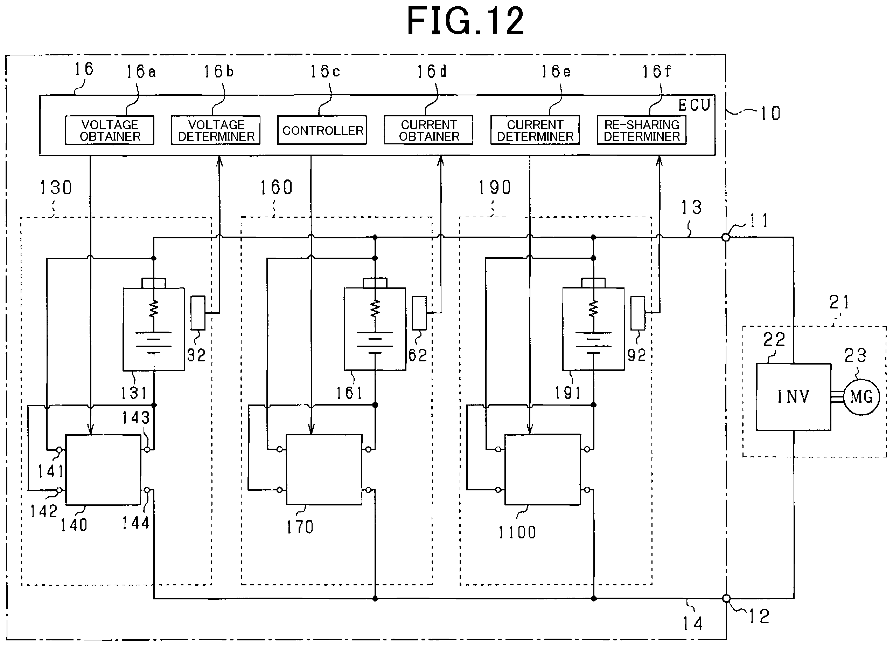

The second embodiment will be described with reference to the drawings, mainly focusing on differences from the first embodiment. The power conversion system 10 in this embodiment, as shown in Fig. 12, includes the first storage battery module 130, the second storage battery module 160, and the third storage battery module 190. In the following discussion, a configuration of the first storage battery module 130 will first be described.

The first storage battery module 130 includes the first power converter 140 and the first storage battery 131. The primary positive terminal 141 of the first power converter 140 and a positive electrode of the first storage battery 131 are electrically connected to the inverter 22 via the high-potential path 13. The primary negative terminal 142 of the first power converter 140 is electrically connected to a negative electrode of the first storage battery 131.

The secondary positive terminal 143 of the first power converter 140 is electrically connected to the negative electrode of the first storage battery 131. The secondary negative terminal 144 of the first power converter 140 is electrically connected to the inverter 22 through the low-potential path 14. In other words, the secondary terminal pair of the first power converter 140 is electrically connected in series with the first storage battery 131 on the negative electrode of the first storage battery 131.

The second storage battery module 160 includes the second power converter 170 and the second storage battery 161. The third storage battery module 190 includes the third power converter 1100 and the third storage battery 191. Configurations of the second and third storage battery modules 160 and 190 are the same as that of the first storage battery module 130, and detailed descriptions thereof will be omitted here. Each of the power converters 140, 170, and 1100 is, for example, an isolated DC-DC converter as in the first embodiment. Each of the storage batteries 131, 161, and 191 is, for example, a battery pack as in the first embodiment.

The control device 16 performs switching control for the power converters 140, 170, and 1100, as in the first embodiment. The control device 16 also performs the overvoltage suppression control and the overcurrent suppression control during execution of the switching control, as in the first embodiment.

The second embodiment may also be implemented with modified configurations as described in modification examples of the first embodiment.

### OTHER EMBODIMENTS

The above-described embodiments may also be implemented with the following modifications.

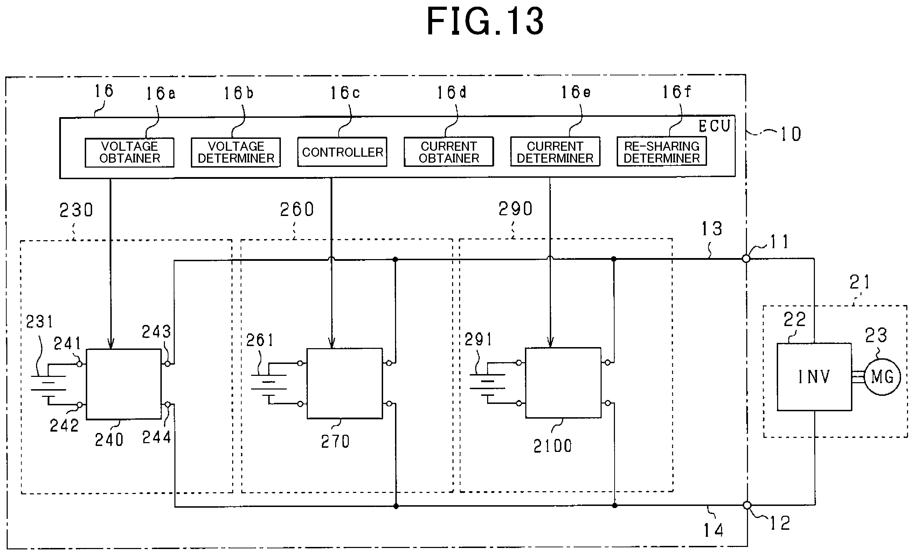

The storage battery module may have a configuration shown in Fig. 13. Specifically, the power conversion system 10 includes the first storage battery module 230, the second storage battery module 260, and the third storage battery module 290. A configuration of the first storage battery module 230 will first be described below.

The first storage battery module 230 includes the first power converter 240 and the first storage battery 231. The primary positive terminal 241 of the first power converter 240 is electrically connected to the positive electrode of the first storage battery 231. The primary negative terminal 242 of the first power converter 240 is electrically connected to the negative electrode of the first storage battery 231. The secondary positive terminal 243 of the first power converter 240 is electrically connected to the inverter 22 through the high-potential path 13. The secondary negative terminal 244 of the first power converter 240 is electrically connected to the inverter 22 through the low-potential path 14.

The second storage battery module 260 includes the second power converter 270 and the second storage battery 261. The third storage battery module 290 includes the third power converter 2100 and the third storage battery 291. Configurations of the second and third storage battery modules 260 and 290 are the same as that of the first storage battery module 230, and detailed descriptions thereof will be omitted here. Each of the power converters 240, 270, and 2100 is, for example, an isolated DC-DC converter as in the first embodiment. Each of the storage batteries 231, 261, and 291 is, for example, a battery pack as in the first embodiment.

The control device 16 performs switching control for the power converters 240, 270, and 2100, as in the first embodiment. Further, the control device 16 performs the overvoltage suppression control and the overcurrent suppression control during execution of the switching control, as in the first embodiment.

The voltage applied to the secondary terminal pair of each of the power converters 240, 270, and 2100 is the voltage between the paths 13 and 14. Therefore, unlike the first embodiment and the second embodiment, in each of the power converters 240, 270, and 2100, the influence of the voltage at a corresponding one of the storage batteries 231, 261, and 291 on the voltage applied to the secondary terminal pair is small. This results in a lower possibility that an overvoltage is applied to the secondary terminal pair of each of the power converters 240, 270, and 2100 than in the first embodiment and the second embodiment. However, for example, when the load 21 rapidly changes from a driven state to a no-load state, current may temporarily flow among the storage battery modules 230, 260, and 290. In this case, in the storage battery module into which current flows from another storage battery module among the storage battery modules 230, 260, and 290, there is a possibility that an overvoltage is temporarily applied to the corresponding power converter 240, 270, or 2100 or that an overcurrent temporarily flows therein. In order to alleviate such a drawback, the control device 16 is configured to execute at least one of the overvoltage suppression control and the overcurrent suppression control, thereby enabling the power conversion system 10 in which the storage battery modules 230, 260, and 290 are electrically connected in parallel to be appropriately realized.

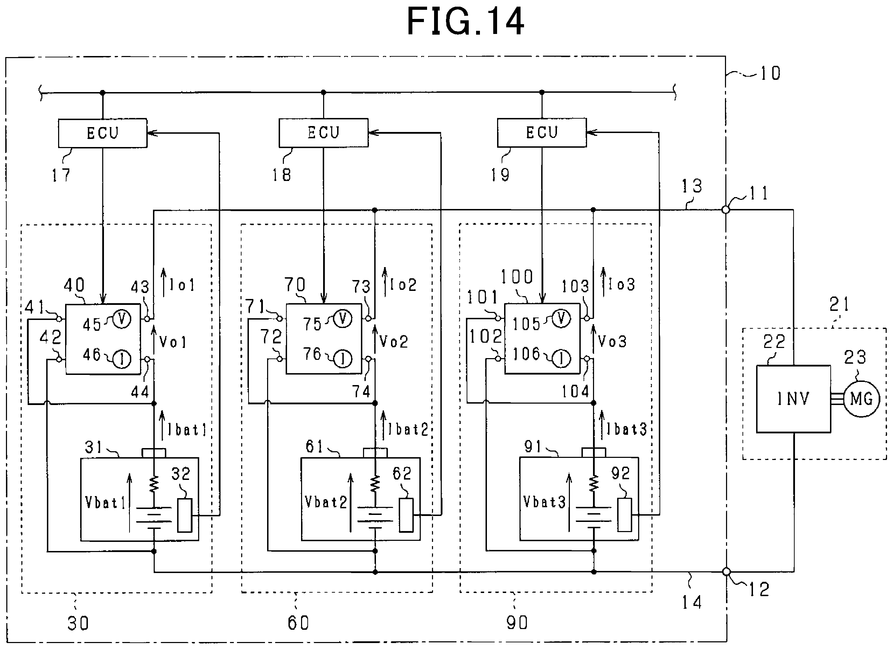

The control device is not limited to one that collectively controls the power converters 40, 70, and 100, and may instead control the power converters 40, 70, and 100 individually. Specifically, as shown in Fig. 14, the power conversion system 10 may include the first control device 17, the second control device 18, and the third control device 19. The first control device 17 is provided only for the first storage battery module 30. The value detected by the first battery monitoring device 32 and values measured by the sensors 45 and 46 are input to the first control device 17. The second control device 18 is provided only for the second storage battery module 60. The value detected by the second battery monitoring device 62 and the values measured by the sensors 75 and 76 are input to the second control device 18. The third control device 19 is provided only for the third storage battery module 90. The value detected by the third battery monitoring device 92 and the values measured by the sensors 105 and 106 are input to the third control device 19.

Each of the control devices 17, 18, and 19 sets a command value (i.e., a target value) of the secondary current in a corresponding one of the storage battery modules 30, 60, and 90. Each of the control devices 17, 18, and 19 performs switching control for a corresponding one of the power converters the power converters 40, 70, and 100 using the set command value.

Each of the control devices 17, 18, and 19 is configured to be communicable via wired or wireless communication means, and information on the input detection values and/or the current command values is transmittable and receivable thereamong. Even in this case, the functions of the voltage obtainer 16a, the voltage determiner 16b, the controller 16c, the current obtainer 16d, the current determiner 16e, and the re-sharing determiner 16f described in the first embodiment and the modifications of the first embodiment may be achieved by the control devices 17, 18, and 19.

Each of the control devices 17, 18, and 19 is not limited to being provided outside the corresponding storage battery modules 30, 60, and 90, and may instead be installed inside the corresponding storage battery modules 30, 60, and 90. Further, in the power conversion system 10 described in the second embodiment or in Fig. 13, the control devices may control the power converters individually, as in the present embodiment.

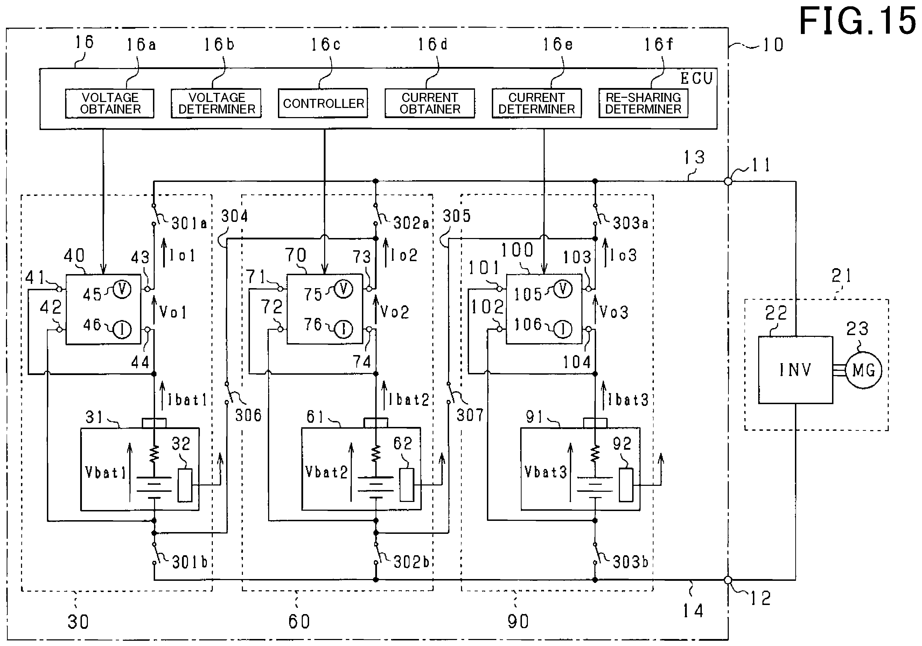

The configuration of the power conversion system 10 may be modified to have a configuration shown in Fig. 15. The power conversion system 10 may include the first, second, and third high-potential switches 301a, 302a, and 303a, and the first, second, and third low-potential switches 301b, 302b, and 303b. Each of the switches 301a, 302a, 303a, 301b, 302b, and 303b is implemented by a relay or a semiconductor switching device.

The first high-potential switch 301a is arranged in a portion of the high-potential path 13 closer to the first storage battery module 30 than a junction of the high-potential path 13 with the second storage battery module 60. The first low-potential switch 301b is arranged in a portion of the low-potential path 14 closer to the first storage battery module 30 than a junction of a portion of the low-potential path 14 with the second storage battery module 60, and on a lower-potential side than a junction of a portion of the low-potential path 14 with the primary negative terminal 42 of the first power converter 40.

The second high-potential switch 302a is arranged in a first path that electrically connects the secondary positive terminal 73 of the second power converter 70 and the high-potential path 13. The second low-potential switch 302b is arranged in a second path that electrically connects the negative terminal of the second storage battery 61 and the low-potential path 14, on a lower-potential side than a junction of the second path with the primary negative terminal 72 of the second power converter 70.

The third high-potential switch 303a is provided in a portion of a third path that electrically connects the secondary positive terminal 103 of the third power converter 100 and the high-potential path 13. The third low-potential switch 303b is arranged in a fourth path that electrically connects the negative terminal of the third storage battery 91 and the low-potential path 14, on a lower-potential side than a junction of the fourth path with the primary negative terminal 102 of the third power converter 100.

The power conversion system 10 may include the first connection path 304 and the second connection path 305. The first connection path 304 has a first end electrically connected between the first low-potential switch 301b and a junction of a portion of the low-potential path 14 with the primary negative terminal 42 of the first power converter 40. The first connection path 304 also has a second end electrically connected to a portion of a path that electrically connects the secondary positive terminal 73 of the second power converter 70 and the high-potential path 13, between the secondary positive terminal 73 and the second high-potential switch 302a. Note that the configuration is not limited to that shown in Fig. 15, and the first end of the first connection path 304 may be electrically connected to the low-potential path 14 between a junction of a portion of the low-potential path 14 with the primary negative terminal 42 of the first power converter 40 and the negative terminal of the first storage battery 31. In other words, the first end of the first connection path 304 only needs to be electrically connected in the low-potential path 14 between the negative terminal of the first storage battery 31 and the first low-potential switch 301b.

The second connection path 305 has a first end electrically connected to a portion of a path that electrically connects the negative terminal of the second storage battery 61 and the low-potential path 14, between a junction of that path with the primary negative terminal 72 of the second power converter 70 and the second low-potential switch 302b. The second connection path 305 has a second end electrically connected to a portion of a path that electrically connects the secondary positive terminal 103 of the third power converter 100 and the high-potential path 13, between the secondary positive terminal 103 and the third high-potential switch 303a. Note that the configuration is not limited to that shown in Fig. 15, and the first end of the second connection path 305 may be electrically connected to a portion of a path that electrically connects the negative terminal of the second storage battery 61 and the low-potential path 14, between a junction of that path with the primary negative terminal 72 of the second power converter 70 and the negative terminal of the second storage battery 61. In other words, the first end of the second connection path 305 only needs to be electrically connected to the path that electrically connects the negative terminal of the second storage battery 61 and the low-potential path 14, between the negative terminal of the second storage battery 61 and the second low-potential switch 302b.

The power conversion system 10 includes the first connection switch 306 and the second connection switch 307. Each of the connection switches 306 and 307 is made of a relay or a semiconductor switching device. The first connection switch 306 is installed in the first connection path 304. The second connection switch 307 is installed in the second connection path 305.

The control device 16 may control on-off operations of the switches 301a, 302a, 303a, 301b, 302b, 303b, 306, and 307 to change electrical connection relationships of the load 21 with the storage battery modules 30, 60, and 90. For example, the control device 16 may turn on the switches 301a, 302a, 303a, 301b, 302b, and 303b, and turn off the connection switches 306 and 307. This causes the storage battery modules 30, 60, and 90 to be electrically connected in parallel to the load 21. Alternatively, the control device 16 may turn on the switches 301a, 303b, 306, and 307, and turn off the switches 301b, 302a, 302b, and 303a. This results in the storage battery modules 30, 60, and 90 being electrically connected in series to the load 21.

In the present embodiment, when the storage battery modules 30, 60, and 90 are electrically connected in parallel to the load 21, the control device 16 is capable of performing at least one of the overvoltage suppression control and the overcurrent suppression control, as in the above-described embodiments. In addition, in the power conversion system 10 described in the second embodiment or in Fig. 13, the electrical connection relationship between the load 21 and the storage battery module may be configured to be switchable, as described in the present embodiment.

The control device 16 may perform at least one of the overvoltage suppression control and the overcurrent suppression control when the load 21 is not electrically connected to the power conversion system 10. For example, when no request is generated to drive the rotating electrical machine 23 in the power running mode or the regenerative mode, and a request is generated to control the amount of electric power stored in each of the storage batteries 31, 61, and 91, it may result in a request being generated to transfer electric power only among the storage batteries 31, 61, and 91. In this case, the control device 16 may perform at least one of the overvoltage suppression control and the overcurrent suppression control during execution of the switching control.

In a case where operation of one of the power converters is stopped in a specific storage battery module that is one of the storage battery modules 30, 60, and 90, the control device 16 may perform only the overcurrent suppression control with respect to the specific storage battery module. In this case, in step S10, the voltage obtainer 16a needs not acquire the secondary terminal voltage at the specific storage battery module. Further, for example, in step S11, the voltage determiner 16b needs not determine whether the specific storage battery module is the voltage-excess battery module.

The load 22 electrically connecting with the power conversion system 10 is not limited to the inverter 22 and the rotating electrical machine 23, but however, may be implemented by a DC-DC converter, an external electrical charger and/or an electrical heater.

The switches of the power converters in each of the above-described embodiments are made of N-channel MOSFETs, but may alternatively be implemented by IGBTs each of which has a collector serving as a high-potential terminal and an emitter serving as a low-potential terminal, and has a freewheel diode connected in reverse parallel thereto.

Each power converter is not limited to the one described with reference to Fig. 2. A center-tapped isolated DC-DC converter, a resonant DC-DC converter, or a non-isolated DC-DC converter such as a buck converter may be employed.

In the power conversion system 10, at least two of the storage battery modules described in the first embodiment, the storage battery modules described in the second embodiment, and the storage battery modules described with reference to Fig. 13 may be combined.

The number of the storage battery modules included in the power conversion system 10 may be two, or may be four or more. In this case, each of the storage battery modules may be configured similarly to the storage battery modules 30, 60, and 90 described in the first embodiment, configured similarly to the storage battery modules 130, 160, and 190 described in the second embodiment, or configured similarly to the storage battery modules 230, 260, and 290 described with reference to Fig. 13.

The storage unit included in each storage battery module is not limited to a storage battery, and may be, for example, a large-capacity electric double-layer capacitor, or may include both a storage battery and an electric double-layer capacitor. Further, the storage unit may be a fuel cell.

The power conversion system 10 in the above-described embodiments is mounted in a vehicle, but may alternatively be installed in a moving body such as an aircraft or a ship. When the moving body is an aircraft, the rotating electrical machine 23 serves as a flight power source of the aircraft. Alternatively, when the moving body is a ship, the rotating electrical machine 23 serves as a propulsion power source of the ship. Further, the power conversion system 10 is not limited to being mounted on a moving body, and may also be used as a stationary power source.

The control device 16 and the methods described in the present disclosure may be implemented by a dedicated computer including a processor and a memory programmed to execute one or more functions embodied in a computer program. Alternatively, the control device 16 and the methods described in the present disclosure may be implemented by a dedicated computer including a processor configured with one or more dedicated hardware logic circuits. Alternatively, the control device 16 and the methods described in the present disclosure may be implemented by one or more dedicated computers including a combination of (i) a processor and a memory programmed to execute one or more functions and (ii) a processor configured with one or more hardware logic circuits. Further, the computer program may be stored, as instructions to be executed by a computer, in a computer-readable non-transitory tangible recording medium.

The above-described embodiments provide following aspects.

### FIRST ASPECT

A control apparatus (16 to 19) for use in a power conversion system (10) equipped with a plurality of storage battery modules (30, 60, 90, 130, 160, 190, 230, 260, 290) each of which includes a storage battery (31, 61, 91, 131, 161, 231, 261, 291) and a power converter (40, 70, 100, 140, 170, 1100, 240, 270, 2100) electrically connected to the storage battery, the storage battery modules being electrically connected in parallel with each other, the control apparatus comprising:
a voltage obtainer (16a) which obtains a terminal voltage developed at at least one of the power converters; and
a controller (16c) that works to perform switching control for the power converters to suppress a magnitude of the obtained terminal voltage from exceeding an upper limit voltage.

### SECOND ASPECT

The control apparatus as set forth in the above-described first aspect, wherein the power converter (40, 70, 100, 140, 170, 1100) of each of the storage battery modules has a primary terminal pair including a first primary terminal and a second primary terminal, the first primary terminal being electrically connected to a positive side of the storage battery, the second primary terminal being electrically connected to a negative side of the storage battery. The power converter of each of the storage battery modules has a secondary terminal pair including a first secondary terminal and a second secondary terminal. The second secondary terminal is electrically connected to one of the positive side and the negative side of the storage battery. The first secondary terminal is electrically connected to a load (21). In each of the storage battery modules, one of the positive side and the negative side of the storage battery which is not electrically connected to the second secondary terminal of the power converter is electrically connected to the load. The voltage obtainer works to obtain a secondary terminal voltage applied to the secondary terminal pair of at least one of the power converters. The controller performs the switching control to suppress a magnitude of the obtained secondary terminal voltage from exceeding the upper limit voltage.

### THIRD ASPECT

The control apparatus as set forth in the above-described second aspect, further comprising a voltage determiner (16b) which determines whether, among the storage battery modules, there is a voltage-excess battery module at which the magnitude of the secondary terminal voltage obtained by the voltage obtainer exceeds the upper limit voltage. When it is determined that there is the voltage-excess battery module, the controller, in the switching control, changes a module current flowing in the voltage-excess battery module so as to decrease the magnitude of the secondary terminal voltage at the voltage-excess battery module. The controller changes a module current flowing through a first storage battery module other than the voltage-excess battery module among the storage battery modules as a function of a change in the module current in the voltage-excess battery module.

### FOURTH ASPECT

The control apparatus as set forth in the above-described third aspect, wherein when it is determined that there is the voltage-excess battery module, the controller, in the switching control for discharging the storage battery of the voltage-excess battery module, reduces the magnitude of the module current in the voltage-excess battery module. The controller increases the magnitude of the module current in a storage battery module in which the storage battery being electrically discharged, other than the voltage-excess battery module among the storage battery modules or decreases the magnitude of the module current in a storage battery module in which the storage battery is electrically charged among the storage battery modules.

### FIFTH ASPECT

The control apparatus as set forth in the above-described third or fourth aspect, wherein when it is determined that there is the voltage-excess battery module, the controller, in the switching control to electrically charge the storage battery of the voltage-excess battery module, increases the module current in the voltage-excess battery module. The controller decreases the magnitude of the module current in a storage battery module in which the storage battery is electrically charged, other than the voltage-excess battery module among the storage battery modules or increases the magnitude of the module current in a storage battery module in which the storage battery is electrically discharged among the storage battery modules.

### SIXTH ASPECT

The control apparatus as set forth in any one of the above-described third to fifth aspects, further comprising: (a) a current obtainer (16d) configured to obtain a module current in at least one of the storage battery modules; and (b) a current determiner (16e) configured to determine whether, among the storage battery modules, there is a current-excess battery module in which a magnitude of the obtained module current exceeds an upper limit current. When it is determined that there is the current-excess battery module, the controller performs, in the switching control, a re-sharing process to distribute an excess amount of the module current over the upper limit current in the current-excess battery module to the storage battery module other than the current-excess battery module.

### SEVENTH ASPECT

The control apparatus as set forth in the above-described sixth aspect, further comprising a re-sharing determiner (16f) configured to determine, when it is determined that there is the current-excess battery module, whether the re-sharing process is required to be executed. When it is determined that the re-sharing process is required to be executed, the controller performs the re-sharing process in the switching control. Alternatively, when it is determined that the re-sharing process is not required to be executed, the controller decreases a total amount of module currents in the storage battery modules.

### EIGHTH ASPECT

The control apparatus as set forth in the above-described sixth or seventh aspect, wherein when it is determined that there is neither the voltage-excess battery module nor the current-excess battery module, the controller maintains a magnitude of the module current in each of the storage battery modules in the switching control.

### NINTH ASPECT

The control apparatus as set forth in any one of the above-described second to eighth aspects, wherein the voltage obtainer obtains, as the secondary terminal voltage, a voltage measured by a voltage sensor (45, 75, 105) installed on the secondary terminal pair of at least one of the power converters.

### TENTH ASPECT

The control apparatus as set forth in any one of the second to ninth aspects, wherein the voltage obtainer derives the secondary terminal voltage calculated using a voltage develop at at least one of the storage batteries.

### ELEVENTH ASPECT

The control apparatus as set forth in any one of the above-described second to tenth aspects, wherein the voltage obtainer derives the secondary terminal voltage calculated using a battery parameter representing a state of at least one of the storage batteries.

### TWELFTH ASPECT

A control apparatus (16 to 19) for use in a power conversion system (10) equipped with a plurality of storage battery modules (30, 60, 90, 130, 160, 190, 230, 260, 290) each of which includes a storage battery (31, 61, 91, 131, 161, 231, 261, 291) and a power converter (40, 70, 100, 140, 170, 1100, 240, 270, 2100) electrically connected to the storage battery, the storage battery modules being electrically connected in parallel with each other. The control apparatus comprises: (a) a current obtainer (16d) configured to obtain a module current in at least one of the storage battery modules; (b) a current determiner (6e) configured to determine whether there is a current-excess battery module in which a magnitude of the obtained module current exceeds an upper limit current among the battery storage modules; and (c) a controller (16c) configured to perform switching control for the power converters, such that, when it is determined that there is the current-excess battery module, an excess of the module current in the current-excess battery module over the upper limit current is distributed to the storage battery module other than the current-excess battery module.

### THIRTEENTH ASPECT

A power conversion system comprising:
a plurality of the above-described storage battery modules; and the controller according to any one of the above-described first to twelfth aspects.

### FOURTEENTH CONFIGURATION

A program for use with a power conversion system equipped with a plurality of storage battery modules (30, 60, 90, 130, 160, 190, 230, 260, 290) each of which includes a storage battery (31, 61, 91, 131, 161, 231, 261, 291) and a power converter (40, 70, 100, 140, 170, 1100, 240, 270, 2100) electrically connected to the storage battery, the storage battery modules being electrically connected in parallel with each other. The program causes a computer (16 to 19) to execute:
a current obtaining process of obtaining a module current in at least one of the storage battery modules;
a current determining process of determining whether there is a current-excess battery module in which the obtained module current exceeds an upper limit current among the storage battery modules; and
a control process of, when it is determined that there is the current-excess battery module, performing the switching control for the power converters to distribute an excess of the module current over the upper limit current in the current-excess battery module to the storage battery modules other than the current-excess battery module.

### FIFTEENTH CONFIGURATION

A control method for use with a power conversion system equipped with a plurality of storage battery modules (30, 60, 90, 130, 160, 190, 230, 260, 290) each of which includes a storage battery (31, 61, 91, 131, 161, 231, 261, 291) and a power converter (40, 70, 100, 140, 170, 1100, 240, 270, 2100) electrically connected to the storage battery, the storage battery modules being electrically connected in parallel with each other. The control method is to control the power converters and comprises: the steps of;
obtaining a module current in at least one of the storage battery modules;
determining whether there is a current-excess battery module in which the obtained module current exceeds an upper limit current among the storage battery modules; and
performing, when it is determined that there is the current-excess battery module, the switching control for the power converters to distribute an excess of the module current over the upper limit current in the current-excess battery module to the storage battery modules other than the current-excess battery module.

The present disclosure has been described with reference to the embodiments; however, it should be understood that the present disclosure is not limited to such embodiments or configurations. The present disclosure also encompasses various modifications and equivalent arrangements. In addition, various combinations and forms, as well as other combinations and forms including only one element, more elements, or fewer elements, also fall within the scope and spirit of the present disclosure.

## Claims

1. A control apparatus (16 to 19) for use in a power conversion system (10) equipped with a plurality of storage battery modules (30, 60, 90, 130, 160, 190, 230, 260, 290) each of which includes a storage battery (31, 61, 91, 131, 161, 231, 261, 291) and a power converter (40, 70, 100, 140, 170, 1100, 240, 270, 2100) electrically connected to the storage battery, the storage battery modules being electrically connected in parallel with each other, the control apparatus comprising:
a voltage obtainer (16a) which obtains a terminal voltage developed at at least one of the power converters; and
a controller (16c) that works to perform switching control for each of the power converters to suppress a magnitude of the obtained terminal voltage from exceeding an upper limit voltage.

2. The control apparatus as set forth in claim 1, wherein the power converter (40, 70, 100, 140, 170, 1100) of each of the storage battery modules has a primary terminal pair including a first primary terminal and a second primary terminal, the first primary terminal being electrically connected to a positive side of the storage battery, the second primary terminal being electrically connected to a negative side of the storage battery,
the power converter of each of the storage battery modules has a secondary terminal pair including a first secondary terminal and a second secondary terminal, the second secondary terminal being electrically connected to one of the positive side and the negative side of the storage battery, the first secondary terminal being electrically connected to a load (21),
in each of the storage battery modules, one of the positive side and the negative side of the storage battery which is not electrically connected to the second secondary terminal of the power converter is electrically connected to the load,
the voltage obtainer works to obtain a secondary terminal voltage applied to the secondary terminal pair of at least one of the power converters, and
the controller performs the switching control to suppress a magnitude of the obtained secondary terminal voltage from exceeding the upper limit voltage.

3. The control apparatus as set forth in claim 2, further comprising a voltage determiner (16b) which determines whether, among the storage battery modules, there is a voltage-excess battery module at which the magnitude of the secondary terminal voltage obtained by the voltage obtainer exceeds the upper limit voltage, wherein
when it is determined that there is the voltage-excess battery module, the controller, in the switching control, changes a module current flowing in the voltage-excess battery module so as to decrease the magnitude of the secondary terminal voltage at the voltage-excess battery module, and
the controller changes a module current flowing through a first storage battery module other than the voltage-excess battery module among the storage battery modules as a function of a change in the module current in the voltage-excess battery module.

4. The control apparatus as set forth in claim 3, wherein when it is determined that there is the voltage-excess battery module, the controller, in the switching control for discharging the storage battery of the voltage-excess battery module, reduces the magnitude of the module current in the voltage-excess battery module, and
the controller increases the magnitude of the module current in a storage battery module in which the storage battery being electrically discharged, other than the voltage-excess battery module among the storage battery modules or decreases the magnitude of the module current in a storage battery module in which the storage battery is electrically charged among the storage battery modules.

5. The control apparatus as set forth in claim 3, wherein when it is determined that there is the voltage-excess battery module, the controller, in the switching control to electrically charge the storage battery of the voltage-excess battery module, increases the module current in the voltage-excess battery module, and
the controller decreases the magnitude of the module current in a storage battery module in which the storage battery is electrically charged, other than the voltage-excess battery module among the storage battery modules or increases the magnitude of the module current in a storage battery module in which the storage battery is electrically discharged among the storage battery modules.

6. The control apparatus as set forth in claim 3, further comprising:
a current obtainer (16d) configured to obtain a module current in at least one of the storage battery modules; and
a current determiner (16e) configured to determine whether, among the storage battery modules, there is a current-excess battery module in which a magnitude of the obtained module current exceeds an upper limit current, wherein
when it is determined that there is the current-excess battery module, the controller performs, in the switching control, a re-sharing process to distribute an excess amount of the module current over the upper limit current in the current-excess battery module to the storage battery module other than the current-excess battery module.

7. The control apparatus as set forth in claim 6, further comprising a re-sharing determiner (16f) configured to determine, when it is determined that there is the current-excess battery module, whether the re-sharing process is required to be executed, wherein
when it is determined that the re-sharing process is required to be executed, the controller performs the re-sharing process in the switching control,
when it is determined that the re-sharing process is not required to be executed, the controller decreases a total amount of module currents in the storage battery modules.

8. The control apparatus as set forth in claim 6, wherein when it is determined that there is neither the voltage-excess battery module nor the current-excess battery module, the controller maintains a magnitude of the module current in each of the storage battery modules in the switching control.

9. The control apparatus as set forth in claim 2, wherein the voltage obtainer obtains, as the secondary terminal voltage, a voltage measured by a voltage sensor (45, 75, 105) installed on the secondary terminal pair of at least one of the power converters.

10. The control apparatus as set forth in claim 2, wherein the voltage obtainer derives the secondary terminal voltage calculated using a voltage develop at at least one of the storage batteries.

11. The control apparatus as set forth in claim 2, wherein the voltage obtainer derives the secondary terminal voltage calculated using a battery parameter representing a state of at least one of the storage batteries.

12. A control apparatus (16 to 19) for use in a power conversion system (10) equipped with a plurality of storage battery modules (30, 60, 90, 130, 160, 190, 230, 260, 290) each of which includes a storage battery (31, 61, 91, 131, 161, 231, 261, 291) and a power converter (40, 70, 100, 140, 170, 1100, 240, 270, 2100) electrically connected to the storage battery, the storage battery modules being electrically connected in parallel with each other, the control apparatus comprising:
a current obtainer (16d) configured to obtain a module current in at least one of the storage battery modules;
a current determiner (6e) configured to determine whether there is a current-excess battery module in which a magnitude of the obtained module current exceeds an upper limit current among the battery storage modules; and
a controller (16c) configured to perform switching control for the power converters, such that, when it is determined that there is the current-excess battery module, an excess of the module current in the current-excess battery module over the upper limit current is distributed to the storage battery module other than the current-excess battery module.

13. A power conversion system comprising:
a plurality of the storage battery modules; and
the controller according to any one of claims 1 to 12.

14. A program for use with a power conversion system equipped with a plurality of storage battery modules (30, 60, 90, 130, 160, 190, 230, 260, 290) each of which includes a storage battery (31, 61, 91, 131, 161, 231, 261, 291) and a power converter (40, 70, 100, 140, 170, 1100, 240, 270, 2100) electrically connected to the storage battery, the storage battery modules being electrically connected in parallel with each other, the program causing a computer (16 to 19) to execute:
a voltage obtaining process of obtaining a terminal voltage at at least one of the power converters; and
a control process of performing switching control for each of the power converters so as to suppress a magnitude of the obtained terminal voltage from exceeding an upper limit voltage.

15. A control method for use with a power conversion system equipped with a plurality of storage battery modules (30, 60, 90, 130, 160, 190, 230, 260, 290) each of which includes a storage battery (31, 61, 91, 131, 161, 231, 261, 291) and a power converter (40, 70, 100, 140, 170, 1100, 240, 270, 2100) electrically connected to the storage battery, the storage battery modules being electrically connected in parallel with each other, the control method being to control the power converters and comprising:
a voltage obtaining step of obtaining a terminal voltage developed at at least one of the power converters;
a control step of performing switching control for the power converters to suppress the obtained terminal voltage from exceeding an upper limit voltage.
